# EUROPÄISCHE PATENTSCHRIFT

(11) **EP 3 452 265 B1**
(45) Veröffentlichungstag und Bekanntmachung des Hinweises auf die Patenterteilung: **10.03.2021**
(21) Anmeldenummer: 17730805.3
(22) Anmeldetag: 19.06.2017
(51) Int. Cl.: B29C 49/42, B29C 49/64, B29C 49/36, B29C 49/06, B29K 67/00, B29K 23/00, B29L 31/00

(54) **HEIZVORRICHTUNG FÜR EINE BLASMASCHINE MIT FALTBARER FÖRDERKETTE**
HEATING APPARATUS FOR A BLOW-MOULDING MACHINE WITH A FOLDABLE CONVEYING CHAIN
DISPOSITIF DE CHAUFFAGE POUR UNE MACHINE DE SOUFFLAGE PRÉSENTANT UNE CHAÎNE D'ALIMENTATION REPLIABLE

(30) Priorität: 29.06.2016 DE 102016007850
(43) Veröffentlichungstag der Anmeldung: 13.03.2019
(73) Patentinhaber: KHS Corpoplast GmbH, 22145 Hamburg (DE)
(72) Erfinder: BAUMGARTE, Rolf, 22926 Ahrensburg (DE); LEWIN, Frank, 22889 Tangstedt (DE); LINKE, Michael, 22159 Hamburg (DE); MEYER, Niels, 22869 Schenefeld (DE); ULUTÜRK, Deniz, 22765 Hamburg (DE)
(74) Vertreter: Eisenführ Speiser
(86) Internationale Anmeldenummer: PCT/EP2017/064949
(87) Internationale Veröffentlichungsnummer: WO 2018/001778

(56) Entgegenhaltungen:
- DE-A1- 19 906 309
- FR-A1- 2 736 583
- US-A1- 2016 101 946
- US-B2- 7 435 076
- US-B2- 7 946 842

## Beschreibung

Die Erfindung betrifft eine Heizvorrichtung zur thermischen Konditionierung von für die Blasformung vorgesehenen Vorformlingen nach dem Oberbegriff des Anspruchs 1, eine Blasmaschine nach dem Oberbegriff des Anspruchs 12 und ein Verfahren zum Transport von aus thermoplastischem Material bestehenden Vorformlingen nach dem Oberbegriff des Anspruchs 13

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine, also innerhalb einer Vorrichtung zur blasumformenden Herstellung von Fertigbehältern aus Vorformlingen, unterschiedlichen Bearbeitungsstationen zugeführt. Typischerweise weist eine derartige Blasformungsmaschine bzw. Blasmaschine eine Aufheizvorrichtung sowie eine Blaseinrichtung auf, in deren Bereich der zuvor in der Aufheizvorrichtung temperierte Vorformling durch biaxiale Orientierung zu einem Behälter expandiert wird. Die Expansion erfolgt z.B. mit Hilfe von Druckluft, die in den zu expandierenden Vorformling eingeleitet wird. Der verfahrenstechnische Ablauf bei einer derartigen Expansion des Vorformlings wird zum Beispiel in der Druckschrift DE 43 40 291 A1 erläutert.

Die Einleitung des unter Druck stehenden Gases umfasst auch die Druckgaseinleitung in die sich entwickelnde Behälterblase sowie die Druckgaseinleitung in den Vorformling zu Beginn des Blasumformvorganges bzw. Blasvorganges. Es sind auch andere Fluide zur Blasformung verwendbar, insbesondere auch die Verwendung des in den Behälter abzufüllenden Füllgutes. Die nachfolgende allgemeine Beschreibung erfolgt gleichwohl am Beispiel einer mit Druckgas arbeitenden Blasmaschine, ohne dass sich die Erfindung auf solche Blasmaschinen beschränkt.

Der grundsätzliche Aufbau einer Blasstation zur Behälterformung wird zum Beispiel in der Druckschrift DE 42 12 583 A1 beschrieben. Möglichkeiten zur Temperaturkonditionierung der Vorformlinge werden in der DE 23 52 926 A1 erläutert. Auf die genannten Schriften wird explizit Bezug genommen und insofern erübrigt sich eine weitere Beschreibung zu Blasstationen und zur Temperaturkonditionierung.

Innerhalb der Vorrichtung zur Blasformung können die Vorformlinge sowie die geblasenen Behälter mit Hilfe unterschiedlicher Transport- und Handhabungseinrichtungen transportiert werden. Bekannt ist z.B. die Verwendung von Transportdornen, an denen die Vorformlinge zum Transport gehaltert sind. Die Vorformlinge können aber auch mit anderen Trageinrichtungen gehandhabt und transportiert werden. Die Verwendung von Greifzangen zur Handhabung und zum Transport von Vorformlingen und die Verwendung von Klemmdornen, die zur Halterung in einen Mündungsbereich des Vorformlings einführbar sind, gehören ebenfalls zu den verfügbaren Konstruktionen.

Ein Transport und eine Handhabung von Behältern und Vorformlingen unter Verwendung von Übergaberädern wird beispielsweise in der DE 199 06 438 A1 bei einer Anordnung eines Übergaberades zwischen einem Blasrad und einer Ausgabestrecke und eines weiteren Übergaberades zwischen der Heizstrecke und dem Blasrad beschrieben.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, nämlich auf einem sogenannten Blasrad, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Aufheizvorrichtung umlaufen. Bei einer stehenden Beheizung der Vorformlinge derart, dass die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen. Aus dem Stand der Technik sind sowohl aktive, steuerbare als auch passive Klemmelemente bekannt. Passive Klemmelemente bewirken z.B. eine Klemmung aufgrund einer einwirkenden Federkraft, gegen die die Vorformlinge auf die Transportdorne aufgesteckt werden oder gegen die die Vorformlinge vom Transportdorn abgenommen werden, während bei den aktiven Transportdornen eine Betätigung erfolgen muss, z.B. aktorisch oder z.B. durch eine externe Kurvensteuerung, die den Klemmmechanismus auslöst bzw. den Klemmeingriff wieder aufhebt.

Zur Verkürzung der erforderlichen Aufheizzeit ist es bekannt, im Bereich der Heizstrecke NIR-Strahler zu verwenden, deren Heizstrahlung in einem nahen Infrarotbereich emittiert wird, typischerweise mit Wellenlängen zwischen 0,4 und 1 Mikrometer. Die Aufheizung der Vorformlinge erfolgt dabei primär durch Strahlungsabsorption beim Durchgang der NIR-Strahlung durch das Vorformlingsmaterial. Zur Optimierung der Energieausbeute werden derartige Heizstrecken mit einer Vielzahl von Reflektionsflächen ausgestattet, um eine Absorption der Wärmestrahlung durch Bauteile der Heizstrecke möglichst zu vermeiden oder zumindest stark zu reduzieren, und um die NIR-Strahlung erneut zum Heizen auf den Vorformling zu reflektieren.

Typischerweise werden die Heizstrecken zumindest bereichsweise tunnelartig ausgebildet. Die Heizstrecken sind dazu zum Beispiel auf der einen Seite vom Gehäuse mit einer Halterung für die Heizelemente und auf der gegenüberliegenden Seite von einem diesem Gehäuse gegenüberliegenden Reflektor begrenzt; auch als Gegenreflektor bekannt. In vertikaler Richtung kann eine Begrenzung durch einen Boden und/oder einen Deckel erfolgen, je nachdem, ob die Vorformlinge mit ihren Mündungen in lotrechter Richtung nach oben oder nach unten orientiert durch die Heizstrecke hindurch transportiert werden. Auch diese vertikalen Begrenzungen können als Reflektoren ausgebildet werden. Es ist zudem üblich, den Mündungsbereich des Vorformlings zum Beispiel mittels mitlaufender Reflektoren, auch als Mündungsreflektoren bezeichnet, gegen erwärmende Strahlung zu schützen, da dieser Bereich bereits fertig ausgeprägt hergestellt ist und bei der Blasformung keine weitere Verformung erfahren soll.

Der Aufheizvorgang und die Ausbildung eines definierten Temperaturprofils ist ein wichtiger Prozessschritt zur Vorbereitung der Vorformlinge für die Blasumformung in Behälter. Anhand des beim Heizprozess in das Wandmaterial des Vorformlings eingeprägten Temperaturprofils bestimmen sich wesentliche Prozessparameter für die in der Blasstation durchgeführte biaxiale Ausdehnung des Vorformlings. Beispielsweise werden durch das Temperaturprofil die maximale Geschwindigkeit einer in den Vorformling eingeführten Reckstange und die maximale Expansionsgeschwindigkeit der Behälterblase bei der Druckbeaufschlagung des Vorformlings bestimmt. Höhere Geschwindigkeiten führen zu größeren Durchsatzraten und damit zur Effizienzsteigerung der Blasmaschine.

Ein hoher Durchsatz von Vorformlingen durch die Blasmaschine benötigt einen erhöhten Durchsatz von Vorformlingen beim Transport durch die vorgelagerte Aufheizvorrichtung. Damit steigt der für die Aufheizung der Vorformlinge benötigte Energiebedarf. Zum Aufheizen der Vorformlinge wird üblicherweise elektrische Energie in thermische Energie umgewandelt, die dann üblicherweise über Strahlung in die Vorformlinge eingetragen wird. Bei steigenden Durchsatzraten durch die Blasmaschine und durch die Aufheizvorrichtung steigt nicht nur die für den Aufheizprozess benötigte Energiemenge sondern auch die durch einzelne Prozessschritte bedingten Energieverluste. Verluste thermischer Energie entstehen beispielsweise durch Absorption von Wärmestrahlung an Bauteilen der Heizvorrichtung oder durch Strahlungsverluste an in der Heizvorrichtung technisch bedingten Öffnungen zur Umgebung. Aus wirtschaftlichen Gründen und zur Schonung vorhandener Ressourcen besteht die anhaltende Bestrebung, den Energieverluste möglichst gering zu halten.

Nennenswerte Wärmeverluste im Bereich der Aufheizvorrichtung entstehen insbesondere durch das Entweichen von Wärmestrahlung im Bereich der Heizstrecke durch Lücken zwischen den an Transportdornen getragenen Vorformlingen. Zur Lösung dieses Problems werden typischerweise Mündungsreflektoren in Form von Lochblenden verwenden, mit denen die Lücken teilweise geschlossen werden. Üblicherweise befindet sich der Mündungsbereich der Vorformlinge auf der Schattenseite der Lochblende und der Vorformlingskörper auf der Strahlungsseite der Lochblende. Der Vorformlingskörper wird beim Transport durch die Heizvorrichtung aufgeheizt und der Mündungsbereich wird durch die Lochblende vor Überhitzung geschützt. Die Vorformlinge können durch die Bohrung der Lochblenden hindurch aufgenommen und während des Transports entlang der Heizstrecke in einer in die Lochblende eingetauchten Position gehalten werden. Derartige Lösungen sind zum Beispiel aus DE 10 2010 064 545 A1 oder DE 10 2015 005 358 A1 bekannt Weitere gattungsgemäße Vorrichtungen und Verfahren sind in den Patentschriften US7946842B2, US2016/101946, US7435076B2, DE19906309A1, FR2736583A1 und US2013/192256A1 beschrieben.

Beim Transport der Vorformlinge durch eine Heizvorrichtung einer Blasmaschine ist besonderes Augenmerk darauf gelegt, das erforderliche Temperaturprofil bei einem hohen Wirkungsgrad der Heizelemente mit möglichst hohen Durchsatzraten zu erreichen. Zentrale Rolle spielt dabei die Ausgestaltung und die Funktionsweise des Transportsystems, das für die Hantierung und Halterung der Vorformlinge bei ihrer Führung entlang eines Transportweges durch die Heizvorrichtung verwendet wird. Aufgabe der vorliegenden Erfindung ist die Bereitstellung einer Heizvorrichtung der eingangs genannten Art mit einem verbesserten Transportsystem das bei hohen Durchsatzraten ein energieeffizientes Aufheizen der Vorformlinge unterstützt. Weitere Aufgabe ist die Bereitstellung eines Verfahrens zum Transport von Vorformlingen entlang eines Transportweges einer solchen Heizvorrichtung.

Diese Aufgabe wird gelöst durch eine Heizvorrichtung mit den Merkmalen des Anspruchs 1, eine Blasmaschine mit den Merkmalen des Anspruchs 12 und ein Verfahren zum Transport von Vorformlingen mit den Merkmalen des Anspruchs 13 Vorteilhafte Ausgestaltungen sind in den Unteransprüchen angegeben.

Erfindungsgemäß ist eine Heizvorrichtung mit mindestens einer Heizstrecke zur thermischen Konditionierung von aus thermoplastischem Material bestehenden Vorformlingen auf ein für eine Blasumformung geeignetes Temperaturprofil, wobei die Heizvorrichtung eine Transporteinrichtung zum Transport der Vorformlinge entlang eines Transportweges der Heizvorrichtung aufweist, und wobei die Transporteinrichtung Handhabungsmittel zur Halterung und Hantierung jeweils eines einzelnen Vorformlings aufweist, dadurch gekennzeichnet, dass die Transporteinrichtung derart ausgebildet und eingerichtet ist, dass die Vorformlinge in mindestens einem ersten Abschnitt des Transportweges in einer einzigen Reihe geführt sind und in mindestens einem zweiten Abschnitt des Transportweges in zwei benachbarten Reihen geführt sind.

Bei einem mehrreihigen Transport der Vorformlinge ist vorteilhaft, dass der zur Verfügung stehende Bauraum der Heizvorrichtung optimal genutzt werden kann. Im Vergleich zur herkömmlichen einreihigen Führung der Vorformlinge kann beim mehrreihigen Transport der radial zur Umlaufbahn der Transportstrecke innenliegende Raumbereich zur Führung einer weiteren Reihe von Vorformlingen genutzt werden, was einen kompakten Aufbau der Heizvorrichtung und eine geringe Längsausdehnung der Heizstrecken gestattet. Als Transportweg wird insbesondere der Weg verstanden, den ein Vorformling beim Durchlaufen der Heizvorrichtung durchläuft.

Eine Herausforderung ist beim mehrreihigen Transport, dass zur Hantierung von in mehreren Reihen geführten Vorformlingen insbesondere im Zuführ- oder Abgabebereich der Heizvorrichtung, in denen die Vorformlinge in die Transporteinrichtung aufgenommen bzw. daraus abgegeben werden, spezielle Aufnahme- oder Abgabeeinrichtungen nötig sind, die sowohl die auf außenliegenden als auch die auf innenliegenden Bahnen geführten Vorformlinge erreichen. Das erhöht die Komplexität und die Fehleranfälligkeit der eingesetzten Transport- und Handhabungseinrichtungen. Ein wichtiger Aspekt der Erfindung ist daher, dass die Vorformlinge während des Transports durch die Heizeinrichtung von einer mehrreihigen Führung in eine einreihige Führung überführt werden können.

Im Bereich der einreihigen Führung der Vorformlinge, also in einem ersten Abschnitt des Transportweges, können zur Übergabe von Vorformlingen in die Transporteinrichtung oder zu ihrer Entnahme aus der Transporteinrichtung Hantierungseinrichtungen seitlich in den Transportstrom der Vorformlinge eingreifen. Solche Hantierungseinrichtungen können zum Beispiel an Übergaberädern gelagerte Greifelemente sein.

Gegenüber einem zweireihigen Transport bietet der einreihige Transport zudem Vorteile, wenn entlang der Transportstrecke Inspektionseinrichtungen zur Inspektion der Vorformlinge vorgesehen sind. Ein die Vorformlinge seitlich erfassender Abtastbereich einer Inspektionsvorrichtung kann auf eine einzige Transportreihe eingerichtet sein. Zur Erfassung aller Vorformlinge braucht eine Inspektionsvorrichtung im einreihigen Transportbereich nur auf einer Seite des Transportstromes platziert werden.

Die Erfindung verbindet die Vorteile von einreihigem und mehrreihigem Transport, da eine Transition aus einem einreihigen in einen mehrreihigen Transport, bzw. umgekehrt vorgesehen ist.
In der einreihigen Führung werden die Vorformlinge in Transportrichtung hintereinander folgend im Transportstrom bewegt. In der mehrreihigen Führung, also bei der Führung in benachbarten Reihen in Transportrichtung hintereinander folgend, können die Vorformlinge in parallel, insbesondere zwei parallel verlaufenden Transportreihen geführt werden. Der mehrreihige Transport kann sowohl in geradlinigen Transportabschnitten als auch in Kurvenabschnitten des Transportweges vorgesehen sein.

Ein mehrreihiger Transport der Vorformlinge ist insbesondere im Bereich einer Heizstrecke vorteilhaft, da die Vorformlinge in mehreren nebeneinander angeordneten Heizgassen geführt werden können. Diesbezüglich ist also daran gedacht, dass wenigstens eine der Heizstrecken in einem der zweiten Abschnitte angeordnet ist. Denkbar ist zudem, dass eine erste Heizstrecke mit mindestens zwei Heizgassen und eine zweite Heizstrecke mit genau einer Heizgasse in der Heizvorrichtung angeordnet sind. Diese Kombination von unterschiedlichen Heizstrecken ermöglicht eine besonders gute Einstellbarkeit der Temperaturkonditionierung der Vorformlinge.

Heizstrecken mit mehreren nebeneinander angeordneten Heizgassen können gegenüber Heizstrecken mit Einzelgasse in ihrer Längsausdehnung deutlich kürzer gebaut werden, da im Vergleich zu Heizstrecken mit Einzelgasse deutlich mehr Vorformlinge den Heizbereich einer mehrgassigen Heizstrecke durchlaufen. Der Wirkungsgrad der Heizstrecken und damit die Energieeffizienz kann dadurch deutlich verbessert werden.

In einer bevorzugten Ausgestaltung ist daran gedacht, dass die Heizstrecke mindestens eine Heizeinrichtung mit zwei in Transportrichtung der Vorformlinge parallel verlaufenden Heizgassen umfasst, wobei jede Heizgasse jeweils einer der beiden benachbarten Reihen von Vorformlingen zugeordnet ist, wobei die Heizeinrichtung Heizstrahler zur Temperaturkonditionierung der Vorformlinge aufweist, wobei die Heizstrahler insbesondere zwischen den beiden Heizgassen angeordnet sind.

Weiter bevorzugt ist daran gedacht, dass die Heizvorrichtung mindestens zwei entlang des Transportweges beabstandete Heizstrecken aufweist, und wobei insbesondere zwischen den beiden Heizstrecken einer der ersten Abschnitte des Transportweges ausgebildet ist.

Durch den Einsatz mindestens zweier entlang des Transportweges beanstandeter Heizstrecken kann die Temperaturkonditionierung der Vorformlinge bei hohen Durchsatzraten effizient und prozessflexibel gestaltet werden. In den Bereichen zwischen den Heizstrecken können sich zum Beispiel die Umlenkbereiche und/oder Übergabebereiche zur Aufnahme bzw. Abgabe der Vorformlinge befinden.

In einer denkbaren Ausgestaltung kann die Heizvorrichtung derart eingerichtet sein, dass der Transportweg mindestens eine Heizstrecke mit mindestens einer Heizeinrichtung für die Zufuhr thermischer Energie an die Vorformlinge und mindestens einen sich dem Heizbereich in Transportrichtung anschließenden Rangierbereich zum Weitertransport und/oder zur Be- und/oder Entladung von Vorformlingen in bzw. aus der Transporteinrichtung umfasst. Vorzugsweise kann vorgesehen sein, dass die Vorformlinge zum Be- bzw. Entladen in bzw. aus der Transporteinrichtung von den Handhabungsmitteln aus einem Zuführbereich aufgenommen bzw. in einem Übergabebereich an die Handhabungsmittel abgegeben werden.

Weiter kann vorgesehen sein, dass die Heizvorrichtung einen ersten Übergabebereich zur Aufnahme von Vorformlingen an jeweils ein Handhabungsmittel sowie einen zweiten Übergabebereich zur Abgabe der Vorformlinge von den Handhabungsmitteln umfasst, wobei der erste Übergabebereich und/oder der zweite Übergabebereich in einem der ersten Abschnitte angeordnet ist. Die Übergabebereiche befinden sich somit vorzugsweise in dem ersten Abschnitt, also im einreihigen Führungsbereich. Die Aufnahme von Vorformlingen kann als der Anfang des Transportweges verstanden werden den ein Vorformling beim Durchlauf durch die Heizvorrichtung zurücklegt. Entsprechend kann die Abgabe der Vorformlinge als das Ende des Transportweges verstanden werden.

Bei einer einreihigen Führung der Vorformlinge im Bereich der Be- oder Entladung kann vorteilhaft eine geringe Transportdichte mit größeren Abständen zwischen den transportierten Vorformlingen genutzt werden, um die Vorformlinge kollisionsfrei aus der Transporteinrichtung der Heizvorrichtung zu be- oder entladen.

In einer vorteilhaften Ausgestaltung kann vorgesehen sein, dass die Handhabungsmittel jeweils einen quer zur Transportrichtung verschiebbar gelagerten Haltedorn umfassen, wobei der Haltedorn einen in einen Mündungsbereich eines Vorformlings eingreifenden Haltekopf umfasst. Ein in den Mündungsbereich eingreifender Haltekopf ermöglicht insbesondere einen hängenden Transport der Vorformlinge entlang des Transportweges.

Insbesondere zur Ausbildung eines homogenen bzw. eines speziell auf die Form des herzustellenden Behälters angepassten Temperaturprofils kann vorgesehen sein, dass die Handhabungsmittel jeweils ein Kopplungselement für eine Drehung eines mittels des Handhabungsmittels gehalterten Vorformlings aufweisen, wobei im Bereich wenigstens einer der Heizstrecken eine mit den Kopplungselementen zusammenwirkende Drehantriebsvorrichtung vorgesehen ist.

Das Kopplungselement kann beispielsweise ein Zahnkranz an einem als Haltedorn ausgebildeten Handhabungsmittel sein, der mit einer seitlich am Haltedorn angeordneten zum Beispiel als Zahnkette ausgebildeten Drehantriebsvorrichtung in Eingriff bringbar ist. Bei einer Relativbewegung zwischen der Zahnkette und dem Zahnkranz kann der Haltedorn in Drehung gebracht werden.

Konstruktionsdetails einer erfindungsgemäßen Heizvorrichtung insbesondere Details zum Aufbau erfindungsgemäßer Transport- und Handhabungsmittel können wie in DE 10 2015 005 358.2 und der DE 10 2014 017 546.4 ausgeführt sein. Diese Druckschriften werden dazu ausdrücklich in Bezug genommen.

Vorzugsweise ist vorgesehen, dass die Transporteinrichtung eine entlang des Transportweges umlaufende Förderkette aufweist, die mehrere drehgelenkig miteinander verbundene Kettenglieder aufweist und die Handhabungsmittel trägt, wobei sich die Kettenglieder der Förderkette in den ersten Abschnitten des Transportweges in einer Streckstellung befinden und wobei sich die Kettenglieder der Förderkette in den zweiten Abschnitten des Transportweges in einer Faltstellung befinden.

Unter einer Streckstellung des Kettengliedes wird insbesondere verstanden, dass das Kettenglied entlang des Umlaufs der Förderkette ausgerichtet ist, wobei ein Kettenglied in einer Faltstellung insbesondere quer zum Umlauf der Förderkette ausgerichtet ist. Die Ausrichtung eines Kettengliedes bestimmt sich insbesondere anhand der Verbindungsachse zwischen den beiden Drehgelenken, mittels derer ein Kettenglied jeweils mit zwei benachbarten Kettengliedern gelenkig verbunden ist.

Bei der Faltbewegung werden die miteinander gelenkig verbundenen Kettenglieder in abwechselnden Drehrichtung um ihre Drehgelenke verdreht. Dabei wird die Förderkette in ihrer Länge gestaucht, was die Längsausdehnung der Förderkette über die Transportstrecke gesehen im Faltbereich reduziert.

In einer bevorzugten Ausführungsform ist daran gedacht, dass die Transporteinrichtung in einem Übergangsabschnitt zwischen einem der ersten Abschnitte des Transportweges und einem der zweiten Abschnitte es Transportweges angeordnete Führungsmittel zur Zwangsführung der Kettenglieder zwischen einer Streckstellung innerhalb des ersten Abschnitts und einer Faltstellung innerhalb des zweiten Abschnitts umfasst.

Als Übergangsabschnitt wird dabei insbesondere der Transitionsbereich verstanden, in dem die Kettenglieder aus einer Faltstellung in eine Streckstellung bzw. aus einer Streckstellung in eine Faltstellung geführt werden.

Die Führungsmittel können zum Beispiel eine oder mehrere stationär zur umlaufenden Förderkette angeordnete Steuerschienen sein, wobei die Kettenglieder der Förderkette Führungselemente aufweisen, die mit den Steuerschienen zusammenwirken, sodass die Kettenglieder beim der Relativbewegung entlang der Steuerschienen zwangsgeführt in die Faltstellung bzw. in die Streckstellung gezwungen werden.

Insbesondere bei der Verwendung von als Steuerschienen ausgebildeten Führungsmitteln zur Steuerung der Förderkette ist daran gedacht, dass die Führungsmittel derart ausgebildet und eingerichtet sind, dass die Kettenglieder für den zweireihigen Transport der Vorformlinge in einer Faltstellung und für den einreihigen Transport der Vorformlinge in einer Streckstellung geführt sind. Die Kettenglieder werden für den Übergang von der Streckstellung in die Faltstellung insbesondere mäanderförmig gefaltet werden. Eine mäanderförmige, also etwa zickzackartige Faltung unterstützt eine besonders kompakte Führung der Vorformlinge. Die Vorformlinge können somit sehr dicht zueinander geführt werden, was die Zwischenräume zwischen den Vorformlingen verringert und somit den Verlust von Strahlungswärme beim Durchtransport der Vorformlinge durch die Heizstrecke reduziert. Durch eine Verringerung der Abstände der Vorformlinge im mehrreihigen Transport, wird die Transportdichte pro Streckeneinheit erhöht, was eine kürzere Bauform der Heizstrecken zulässt.

Es kann vorgesehen sein, dass die Transporteinrichtung in einem der ersten und/oder einem der zweiten Abschnitte des Transportweges angeordnete Führungsmittel zur Zwangsführung der Kettenglieder umfasst, um die Kettenglieder innerhalb des ersten Abschnitts in der Streckstellung bzw. innerhalb des zweiten Abschnitts in der Faltstellung zu halten. Die Führungsmittel können also sowohl in einem Übergangsabschnitt vorgesehen sein, in dem die Kettenglieder von einer Falt- in eine Streckstellung bzw. von einer Streck- in eine Faltstellung bewegt werden als auch in einem der ersten bzw. zweiten Abschnitte, in denen die Kettenglieder zwangsgeführt in der Streckstellung bzw. in der Faltstellung geführt werden.

In einer denkbaren Ausführungsform der Erfindung kann vorgesehen sein, dass die Förderkette ebenso viele Kettenglieder aufweist wie die Transporteinrichtung Handhabungsmittel, wobei insbesondere jeweils ein Handhabungsmittel an einem Kettenglied gehaltert ist oder jeweils ein Handhabungsmittel koaxial zu einer Drehachse eines Drehgelenkes zwischen zwei Kettengliedern gehaltert ist. Das Drehgelenk zwischen zwei Kettengliedern ist insbesondere das zwei Kettenglieder gelenkig verbindende Drehgelenk.

In einer bevorzugten Ausgestaltung ist daran gedacht, dass die Handhabungsmittel einen quer zur Transportrichtung verschiebbar gelagerten Haltedorn umfassen, der koaxial zu einer Drehachse eines Drehgelenkes des das Handhabungsmittel tragenden Kettengliedes angeordnet ist.

Des Weiteren kann vorgesehen sein, dass die Handhabungsmittel einen quer zur Transportrichtung verschiebbar gelagerten Haltedorn umfassen, der zwischen den Drehachsen zweier Drehgelenke eines Kettengliedes angeordnet ist. Die Längsachse des Haltedorns kann insbesondere exzentrisch bezüglich des Mittelpunktes auf einer zwischen den Drehachsen gedachten geraden Verbindungslinie angeordnet sein. Es kann entsprechend vorgesehen sein, dass der Abstand der Längsachse des Haltedorns zu einer ersten, parallel zur Längsachse des Haltedorns verlaufenden Drehachse des Kettengliedes größer ist als der Abstand der Längsachse des Haltedorns zu einer zweiten, parallel zur Längsachse des Haltedorns angeordneten Drehachse des Kettengliedes.

Zur Steigerung der Energieeffizienz der Heizvorrichtung kann vorgesehen sein, dass die Transporteinrichtung Strahlungsblenden umfasst, die derart von der Förderkette getragen werden, dass sie zumindest in wenigstens einer der Heizstrecken, insbesondere einer Heizstrecke innerhalb eines zweiten Abschnitts des Transportweges, zwischen zwei Handhabungsmitteln zur Anordnung kommen.

In dieser Ausführungsform ist insbesondere daran gedacht, dass zumindest an einigen Kettengliedern jeweils mindestens eine Strahlungsblende angeordnet ist, die beim zwei- oder mehrreihigen Transport der Vorformlinge den vertikalen Durchgang zwischen zwei in einer Reihe hintereinander transportierten Vorformlingen zumindest bereichsweise blockiert.

Konstruktionsdetails und Vorzüge derartiger als Strahlungsblenden ausgebildeten Mündungsreflektoren können auch aus der Druckschrift DE 10 2016 001 630 entnommen werden, die dafür ausdrücklich in Bezug genommen wird.

In einer denkbaren Ausführungsform kann vorgesehen sein, dass die Strahlungsblenden jeweils beweglich an den Kettengliedern einer Förderkette gelagert sind. Insbesondere kann vorgesehen sein, dass die Strahlungsblenden drehbar an den Kettengliedern gelagert sind, wobei die Drehachse der Strahlungsblenden vorzugsweise parallel zu den Drehachsen der Kettenglieder verlaufen.

Eine bewegliche Lagerung der Strahlungsblenden an den Kettengliedern einer Förderkette ermöglicht eine unabhängig von der Faltbewegung der Förderkette gesteuerte Bewegung der Strahlungsblende, was den kompakten Aufbau der Kettenglieder unterstützt. Die Strahlungsblende kann dadurch besonders nahe an die Vorformlinge herangeführt bzw. weit von den Vorformlingen entfernt werden, was in einer Geschlossenstellung eine besonders gute Abdeckung des Zwischenraumes zwischen den transportierten Vorformlingen ergibt und in der Offenstellung viel Raum für das kollisionsfreie Hantieren des Vorformlings lässt.

Alternativ kann vorgesehen sein, dass die Strahlungsblenden unbeweglich an den Kettengliedern befestigt sind. Eine unbewegliche Anordnung der Strahlungsblenden kann robuster und weniger störungsanfällig als der mechanische Aufbau von beweglich angeordneten Strahlungsblenden ausgeführt sein.

In einer weiteren vorteilhaften Ausführungsform ist daran gedacht, dass die Transporteinrichtung eine angetriebene Fördereinrichtung mit umlaufenden Mitnehmern aufweist, wobei wenigstens einige der Kettenglieder der Förderkette jeweils ein Mitnahmeelement aufweisen, wobei in wenigstens einem der zweiten Abschnitte des Transportweges mehrere Mitnahmeelemente mit jeweils einem Mitnehmer bewegungsgekoppelt in Eingriff sind. Der bewegungsgekoppelte Eingriff gestattet die Übertragung einer Zug- bzw. Druckkraft der Fördereinrichtung auf die Förderkette in Bewegungsrichtung der Kettenglieder der Förderkette und sorgt bei der Bewegung der Fördereinrichtung für den Vortrieb der die Vorformlinge tragenden Handhabungsmittel entlang des Transportweges.

Die Fördereinrichtung kann eine aus dem Stand der Technik bekannte Fördereinrichtung sein. Grundsätzlich sind unterschiedliche Ausführungsformen denkbar. Beispielsweise kann die Fördereinrichtung als Schleppkette ausgebildet sein, die in einfacher Variante als Kettenglieder ausgebildete Mitnehmer aufweist. Die als Kettenglieder ausgebildeten Mitnehmer können an an Kettengliedern befestigten Mitnahmeelementen der Förderkette angreifen und so die Förderkette vorantreiben. Die Mitnahmeelemente der Förderkette sind dafür zum Beispiel mit nasenartigen Vorsprüngen ausgestattet, die einen formschlüssigen Eingriff mit den Kettengliedern der Schleppkette erlauben.

Denkbar ist auch, dass die Fördereinrichtung ein Antriebsrad umfasst, das an seinem Umfang mehrere zum Beispiel als Mitnehmerrezesse oder Mitnehmerzähne ausgebildete Mitnehmer aufweist, die an Mitnahmeelementen der Kettenglieder der Förderkette angreifen und so die Förderkette vorantreiben.

Bevorzugt ist als Fördereinrichtung eine Schleppkette vorgesehen, die mehrere Mitnehmer aufweist, die zum Vortrieb der Förderkette an an den Kettengliedern der Förderkette angeordnete, zahnartig ausgebildete Mitnahmeelemente angreifen. Bei Verwendung einer Schleppkette ist daran gedacht, dass die Schleppkette für den Eingriff in die Förderkette in einem Antriebsabschnitt parallel zum Transportweg der Vorformlinge geführt ist.

Der Eingriff der Fördereinrichtung in die Förderkette ist erfindungsgemäß im zweiten Abschnitt, also im Bereich des zweireihigen Transports der Vorformlinge vorgesehen. Im zweireihigen Transportbereich werden die Kettenglieder der Förderkette in einer Faltstellung transportiert. Über den Gesamtumfang der Förderkette gesehen, ist die Transportdichte und die Massenverteilung im zweiten Abschnitt, also im Faltbereich der Förderkette besonders hoch. Der Impuls dieses Förderkettenabschnittes ist größer als der Impuls des Förderkettenbereiches eines ersten Abschnittes, also eines Streckbereiches der Förderkette.

Mit einem Eingriff der Fördereinrichtung in die Förderkette im Bereich des zweiten Abschnittes kann somit eine vergleichsweise große Masse bewegt bzw. beschleunigt werden. Ein Not-Stopp bzw. ein abrupter Halt der Transporteinrichtung kann durch den Eingriff mehrerer Mitnehmer in mehrere Mitnahmeelemente der Förderkette vorteilhaft aufgefangen werden. Die kinetische Energie der Förderkette kann bei einem Halt der Transporteinrichtung im zweiten Abschnitt vorteilhaft auf mehrere Mitnehmer der Fördereinrichtung übertragen und an der Fördereinrichtung kompensiert werden. Die mechanischen Kräfte zwischen Fördereinrichtung und Förderkette lassen sich so besonders vorteilhaft auf eine Vielzahl von Mitnehmern und Mitnahmeelementen verteilen, was punktuelle Materialbelastungen verringert.

Erfindungsgemäß ist auch eine Blasmaschine umfassend eine erfindungsgemäße Heizvorrichtung mit mindestens einer Heizstrecke zur thermischen Konditionierung von aus thermoplastischem Material bestehenden Vorformlingen auf ein für eine Blasumformung geeignetes Temperaturprofil sowie umfassend eine Blasumformvorrichtung zur biaxialen Blasumformung des Vorformlings in einen Behälter. Ausführungsformen, Details und Vorzüge der erfindungsgemäßen Blasmaschine ergeben sich unter anderem auch aus den Erläuterungen und Ausführungsbeispielen zur erfindungsgemäßen Heizvorrichtung.

Erfindungsgemäß ist des Weiteren ein Verfahren zum Transport von aus thermoplastischem Material bestehenden Vorformlingen entlang eines Transportweges einer Heizvorrichtung mit mindestens einer Heizstrecke zur thermischen Konditionierung der Vorformlinge auf ein für eine Blasumformung geeignetes Temperaturprofil, wobei die Vorformlinge in mindestens einem ersten Abschnitt des Transportweges in einer einzigen Reihe geführt werden und in mindestens einem zweiten Abschnitt des Transportweges in zwei benachbarten Reihen geführt werden. Zur thermischen Konditionierung werden die Vorformlinge an Heizelementen mindestens einer Heizstrecke entlang geführt.

In einer Ausführungsform des Verfahrens kann vorgesehen sein, dass die Vorformlinge im Bereich der Heizstrecke in mindestens zwei benachbarten Reihen transportiert werden.

In einer weiteren Ausführungsform kann vorgesehen sein, dass die Vorformlinge in der mindestens einen Heizstrecke durch mindestens eine Heizeinheit mit zwei Heizgassen hindurch geführt werden, wobei jeweils eine der beiden benachbarten Reihen von Vorformlingen in jeweils einer Heizgasse geführt wird.

In einer Ausführungsform ist daran gedacht, dass die Vorformlinge zwischen zwei entlang des Transportweges beabstandeten Heizstrecken in einer einzigen Reihe geführt werden.

In einer weiteren Ausführungsform ist daran gedacht, dass die Vorformlinge in einem ersten Übergabebereich in dem Vorformlinge an Handhabungsmittel übergeben werden und/oder in einem zweiten Übergabebereich in dem Vorformlinge von Handhabungsmitteln abgegeben werden in einer einzigen Reihe transportiert werden .

Insbesondere bei der Verwendung von als Steuerschienen ausgebildeten Führungsmitteln zur Steuerung einer faltbaren Förderkette kann vorgesehen sein, dass die Kettenglieder der Förderkette für den mehrreihigen Transport der Vorformlinge aus einer Streckstellung in eine Faltstellung mäanderförmig gefaltet werden und für den einzelreihigen Transport der Vorformlinge aus einer Faltstellung in eine Streckstellung entfaltet werden.

Weitere Ausführungsformen, Details und Vorzüge des erfindungsgemäßen Verfahrens ergeben sich unter anderem auch aus den Erläuterungen und Ausführungsbeispielen zur erfindungsgemäßen Heizvorrichtung.

Ausführungsbeispiele und Details der Erfindung werden im Folgenden mit Bezug auf die Figuren näher erläutert. Die Erfindung ist in den Figuren zum Teil stark schematisiert dargestellt. Es zeigen:
- Fig. 1: eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Vorformlingen zu Behältern mit angrenzender Heizvorrichtung zur Temperaturkonditionierung der Vorformlinge,
- Fig. 4 - 7: ein Teilbereich einer erfindungsgemäßen Förderkette in einer ersten Ausführungsform,
- Fig. 8 - 9: Beispiele für Streckenführungen beim Transport der Vorformlinge entlang eines Transportweges einer Heizvorrichtung,
- Fig. 10-15: ein Teilbereich einer erfindungsgemäßen Förderkette in einer zweiten Ausführungsform,
- Fig. 16-20: Detailansichten eines Kettengliedes der Förderkette aus den Fig. 10 bis 15 in Draufsichten von der Seite, von oben und von unten,
- Fig. 21 - 24: Detailansichten eines Kettengliedes der Förderkette aus den Fig. 10 bis 15 in perspektivischen Darstellungen, und
- Fig. 25 - 27: schematische Ansichten einer erfindungsgemäßen Förderkette beim Übergang von einer Faltstellung in eine Streckstellung.

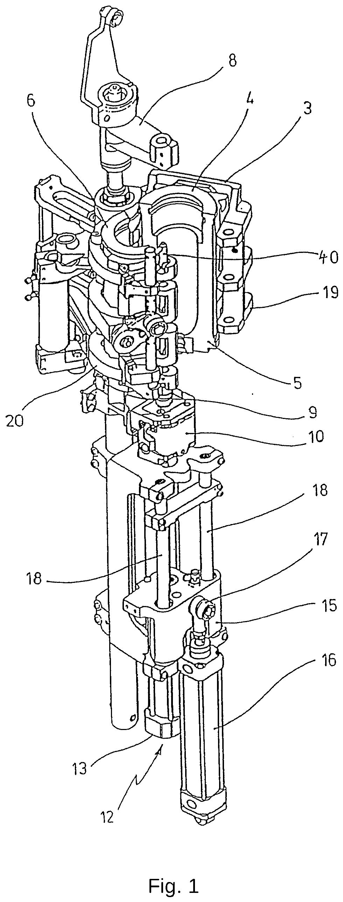

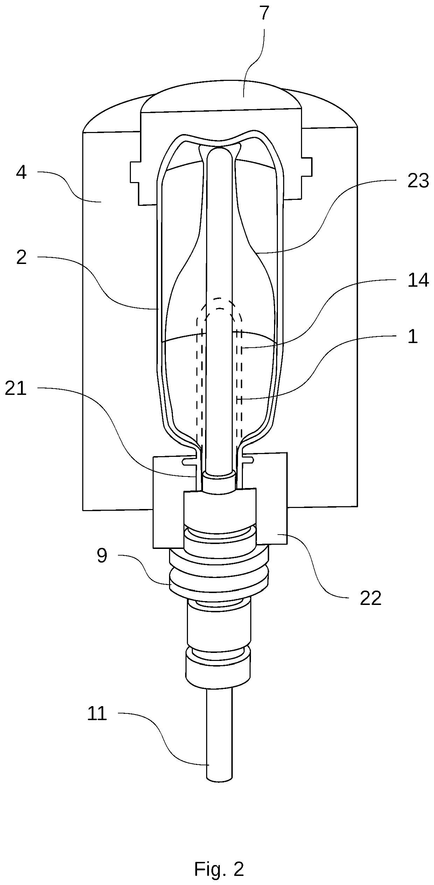

Der prinzipielle Aufbau einer Vorrichtung zur Umformung von Vorformlingen 1 in Behälter 2 ist in Fig. 1 und in Fig. 2 dargestellt. Die Anordnung kann dabei wie dargestellt oder in einer vertikalen Ebene um 180° gedreht erfolgen.

Die Vorrichtung zur Formung des Behälters 2 besteht im Wesentlichen aus einer Blasstation 3, die mit einer Blasform 4 versehen ist, in die ein Vorformling 1 einsetzbar ist. Der Vorformling 1 kann ein spritzgegossenes Teil aus Polyethylenterephthalat sein. Zur Ermöglichung eines Einsetzens des Vorformlings 1 in die Blasform 4 und zur Ermöglichung eines Herausnehmens des fertigen Behälters 2 besteht die Blasform 4 aus Formhälften 5, 6 und einem Bodenteil 7, das von einer Hubvorrichtung 8 positionierbar ist. Der Vorformling 1 kann im Bereich der Blasstation 3 von einem Halteelement 9 fixiert sein. Dieses Halteelement 9 kann z.B. erfindungsgemäß oder wie im Stand der Technik bekannt ausgebildet sein. Es ist beispielsweise möglich, den Vorformling 1 über Zangen oder andere Handhabungsmittel direkt in die Blasform 4 einzusetzen. Zur Ermöglichung einer Druckluftzuleitung ist unterhalb der Blasform 4 ein Anschlusskolben 10 angeordnet, der dem Vorformling 1 Druckluft zuführt und gleichzeitig eine Abdichtung vornimmt. Bei einer abgewandelten Konstruktion ist es grundsätzlich aber auch denkbar, feste Druckluftzuleitungen zu verwenden.

Eine Reckung des Vorformlings 1 erfolgt bei diesem Ausführungsbeispiel mit Hilfe einer Reckstange 11, die von einem Zylinder 12 positioniert wird. Gemäß einer anderen Ausführungsform wird eine mechanische Positionierung der Reckstange 11 über Kurvensegmente durchgeführt, die von Abgriffrollen beaufschlagt sind. Die Verwendung von Kurvensegmenten ist insbesondere dann zweckmäßig, wenn mehrere Blasstationen 3 auf einem rotierenden Blasrad 25 angeordnet sind.

Bei der in Fig. 1 dargestellten Ausführungsform ist das Recksystem derart ausgebildet, dass eine Tandemanordnung von zwei Zylindern 12 bereitgestellt ist. Von einem Primärzylinder 13 wird die Reckstange 11 zunächst vor Beginn des eigentlichen Reckvorganges bis in den Bereich eines Bodens 14 des Vorformlings 1 gefahren. Während des eigentlichen Reckvorganges wird der Primärzylinder 13 mit ausgefahrener Reckstange gemeinsam mit einem den Primärzylinder 13 tragenden Schlitten 15 von einem Sekundärzylinder 16 oder über eine Kurvensteuerung positioniert. Insbesondere ist daran gedacht, den Sekundärzylinder 16 derart kurvengesteuert einzusetzen, dass von einer Führungsrolle 17, die während der Durchführung des Reckvorganges an einer Kurvenbahn entlang gleitet, eine aktuelle Reckposition vorgegeben wird. Die Führungsrolle 17 wird vom Sekundärzylinder 16 gegen die Führungsbahn gedrückt. Der Schlitten 15 gleitet entlang von zwei Führungselementen 18.

Nach einem Schließen der im Bereich von Trägern 19, 20 angeordneten Formhälften 5, 6 erfolgt eine Verriegelung der Träger 19, 20 relativ zueinander mit Hilfe einer Verriegelungseinrichtung 40. Zur Anpassung an unterschiedliche Formen eines Mündungsabschnittes 21 des Vorformlings 1 ist gemäß Fig. 2 die Verwendung separater Gewindeeinsätze 22 im Bereich der Blasform 4 vorgesehen.

Fig. 2 zeigt zusätzlich zum geblasenen Behälter 2 auch gestrichelt eingezeichnet den Vorformling 1 und schematisch eine sich entwickelnde Behälterblase 23.

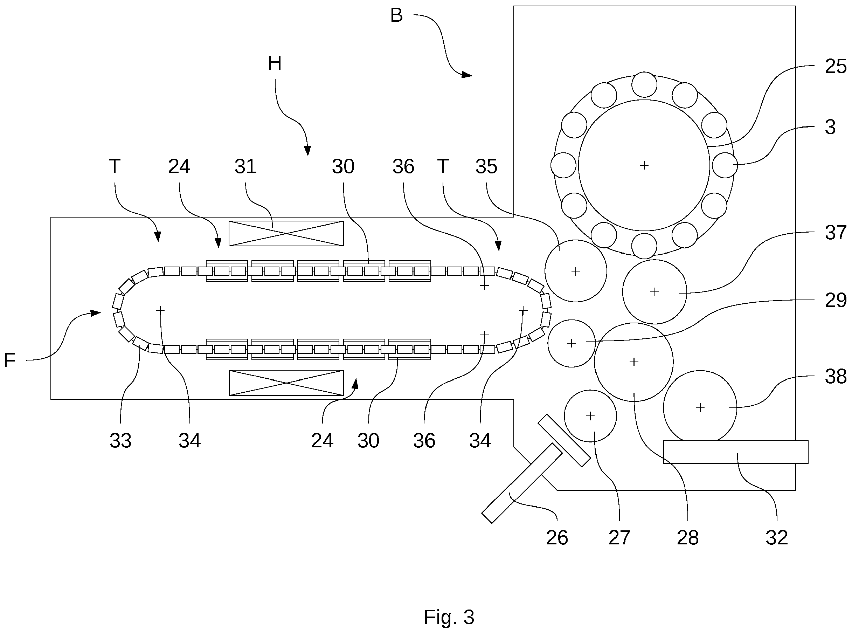

Fig. 3 zeigt den grundsätzlichen Aufbau einer Blasmaschine, die mit einer Heizstrecke 24 sowie einem rotierenden Blasrad 25 versehen ist. Ausgehend von einer Vorformlingseingabe 26 werden die Vorformlinge 1 von Übergaberädern 27, 28, 29 in den Bereich der Heizstrecke 24 transportiert. Entlang der Heizstrecke 24 sind Heizstrahler 30 als Heizeinrichtungen sowie Gebläse 31 angeordnet, um die Vorformlinge 1 zu temperieren. Nach einer ausreichenden Temperierung der Vorformlinge 1 werden diese von einem Übergaberad 35 an das Blasrad 25 übergeben, in dessen Bereich die Blasstationen 3 angeordnet sind. Die fertig geblasenen Behälter 2 werden von weiteren Übergaberädern 37, 28, 38 einer Ausgabestrecke 32 zugeführt. Das Übergaberad 37 ist dabei als ein Entnahmerad und das Übergaberad 38 als ein Ausgaberad ausgebildet.

Um einen Vorformling 1 derart in einen Behälter 2 umformen zu können, dass der Behälter 2 Materialeigenschaften aufweist, die eine lange Verwendungsfähigkeit von innerhalb des Behälters 2 abgefüllten Lebensmitteln, insbesondere von Getränken, gewährleisten, müssen spezielle Verfahrensschritte bei der Beheizung und Orientierung der Vorformlinge 1 eingehalten werden. Darüber hinaus können vorteilhafte Wirkungen durch Einhaltung spezieller Dimensionierungsvorschriften erzielt werden. Als thermoplastisches Material können unterschiedliche Kunststoffe verwendet werden. Einsatzfähig sind beispielsweise PET (Polyethylenterephthalat), PEN (Polyethylennaphthalat) oder PP (Polypropylen).

Die Expansion des Vorformlings 1 während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke 24 Teil des Transportweges der Vorformlinge 1 ist. Der Transport der Vorformlinge 1 erfolgt in der Aufheizvorrichtung H mittels einer Vielzahl umlaufender Transportelemente 33, die kettenartig aneinandergereiht und entlang von Umlenkrädern 34, 36 geführt sind. Die umlaufenden Transportelemente 33 bewegen sich also entlang einer Kettenbahn 55, die auch die Transportbahn der Vorformlinge bildet, da die Vorformlinge 1 entlang der Kettenbahn 55 geführt sind. Insbesondere ist daran gedacht, durch die kettenartige Anordnung der Transportelemente 33 eine im Wesentlichen rechteckförmige Grundkontur aufzuspannen. Bei der dargestellten Ausführungsform werden im Bereich der dem Übergaberad 27 zugewandten Ausdehnung der Heizstrecke 24 ein einzelnes relativ groß dimensioniertes Umlenkrad 34 und im Bereich von benachbarten Umlenkungen zwei vergleichsweise kleiner dimensionierte Umlenkräder 36 verwendet. Grundsätzlich sind aber auch beliebige andere Führungen denkbar.

Zur Ermöglichung einer möglichst dichten Anordnung des Übergaberades 27 und des Blasrades 25 relativ zueinander erweist sich die dargestellte Anordnung als besonders zweckmäßig, da im Bereich der entsprechenden Ausdehnung des Transportweges 55 drei Umlenkräder 34, 36 positioniert sind, und zwar jeweils die kleineren Umlenkräder 36 im Bereich der Überleitung zu den linearen Verläufen des Transportweges 55 und das größere Umlenkrad 34 im unmittelbaren Übergabebereich zum Übergaberad 27 und zum Blasrad 25. Alternativ zur Verwendung von kettenartigen Transportelementen 33 ist es beispielsweise auch möglich, ein rotierendes Heizrad zu verwenden.

Nach einem fertigen Blasen der Behälter 2 werden diese vom Übergaberad 38 aus dem Bereich der Blasstationen 3 herausgeführt und zur Ausgabestrecke 32 transportiert.

Ein Transport der Vorformlinge 1 und der Behälter 2 durch die Blasmaschine B kann in unterschiedlicher Art und Weise erfolgen. Gemäß einer Ausführungsvariante werden die Vorformlinge zumindest entlang des wesentlichen Teiles ihres Transportweges von Transportdornen getragen. Es ist aber auch möglich, einen Transport der Vorformlinge unter Verwendung von Zangen durchzuführen, die außenseitig am Vorformling angreifen, oder Innendorne zu verwenden, die in einen Mündungsbereich des Vorformlings eingeführt werden. Ebenfalls sind hinsichtlich der räumlichen Orientierung der Vorformlinge unterschiedliche Varianten denkbar.

Gemäß einer Variante wird der Vorformling im Bereich der Vorformlingseingabe 26 mit seiner Mündung in lotrechter Richtung nach oben orientiert zugeführt, anschließend gedreht, entlang der Heizstrecke 24 und des Blasrades 25 mit seiner Mündung in lotrechter Richtung nach unten orientiert gefördert und vor einem Erreichen der Ausgabestrecke 32 wieder gedreht. Gemäß einer anderen Variante wird der Vorformling 2 im Bereich der Heizstrecke 24 mit seiner Mündung in lotrechter Richtung nach unten orientiert beheizt, vor Erreichen des Blasrades 25 jedoch wieder um 180° gedreht.

Gemäß einer dritten Ausführungsvariante durchläuft der Vorformling den gesamten Bereich der Blasmaschine B ohne Durchführung von Wendevorgängen mit seiner Mündung in lotrechter Richtung nach oben orientiert.

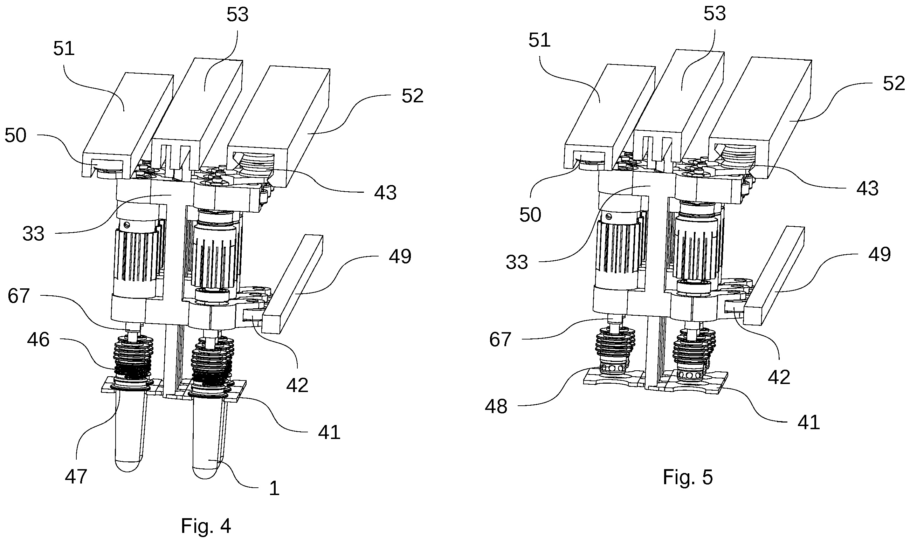

Die Figuren 4 und 5 zeigen in perspektivischer Darstellung einen Teil einer erfindungsgemäßen Förderkette F. Gezeigt sind mehrere als Kettenglieder ausgebildete Transportmittel 33, die an mit Tragdornen ausgestatteten Handhabungsmitteln 39 Vorformlinge 1 tragen. Die Transportmittel 33 sind drehgelenkig miteinander verbunden. In den Figuren 4 und 5 ist der gezeigte Teil einer aus mehreren Kettengliedern 33 bestehenden Förderkette F in einer mäanderartig gefalteten Faltstellung an Führungsschienen 51 und 52 geführt.

Die Kettenglieder 33 stützen sich seitlich mittels Stützrollen 42 an einer Seitenführung 49 ab. Mit der Seitenführung 49 können Querkräfte bzw. Drehmomente kompensiert werden, die zum Beispiel durch in Lotrichtung seitlich zum Schwerpunkt gelagerter Aufhängung der Kettenglieder 33 entstehen.

In dem gezeigten Beispiel sind die Kettenglieder 33 an einem schienenartigen Führungsmittel 52 hängend geführt. Dafür kann wie abgebildet vorgesehen sein, dass zumindest einige der an den Kettengliedern 33 angeordneten Führungsrollen 43 Ringnuten aufweisen, die mit komplementär dazu ausgebildeten Stegen der Führungsschiene 52 zusammenwirken. Damit wird ermöglicht, dass eine aus Kettengliedern 33 gebildete Förderkette F hängend entlang einer Führungsschiene 52 geführt ist.

Es kann vorgesehen sein, dass zumindest einige Kettenglieder 33 Führungsrollenstapel aufweisen, die mehrere übereinander angeordnete Führungsrollen 43 aufweisen, wobei die einzelnen Führungsrollen 43 in dem Stapelverbund jeweils in unterschiedliche Drehrichtungen drehbar sind. Die Führungsrollen 43 im Stapelverbund können sich dabei jeweils seitlich in unterschiedlichen Richtungen an der Führungsschiene 52 abstützen, sodass ein Ausweichen der Kettenglieder 33 quer zur Transportrichtung verhindert wird.

Drehmomente quer zur Transportrichtung der Förderkette F, die zum Beispiel bei einer seitlich zur Lotrichtung des Schwerpunktes der Kettenglieder 33 versetzt angeordneten Führungs- und Tragschiene 52 entstehen, können ebenfalls vorteilhaft kompensiert werden. Zusätzlich können Querkräfte bzw. Drehmomente mit der Seitenführung 49 kompensiert werden.

Wie erkennbar gezeigt, können zusätzlich zu den Führungsrollen 43 weitere Führungsrollen 50 vorgesehen sein, die an einem weiteren, als Führungsschiene ausgebildeten Führungsmittel 51 geführt sind. Die Führungsrolle 50 dient der seitlichen Führung des jeweiligen Kettengliedes 33 beim Transport der Vorformlinge 1 entlang des Transportweges T der Heizvorrichtung H (vgl. Fig. 3). Durch einen geeigneten Kurvenverlauf der Führungsschienen 51 und 51 kann die Förderkette einerseits entlang des Transportweges geführt werden und zusätzlich während des Laufes entlang des Transportweges aus einer Faltstellung in eine Streckstellung bzw. aus einer Streckstellung in eine Faltstellung geführt werden. Zum Beispiel können die Führungsrollen 50 und 43 durch Verringerung des Abstandes der Schienen 51 und 52 zwangsgeführt aufeinander zu bewegt werden. Dabei werden Drehmomente auf die Kettenglieder 33 übertragen, die eine Rotation um die die Kettenglieder 33 verbindenden Drehgelenke bedingen. Die Förderkette F wird dabei gefaltet bzw. entfaltet.

Mit einer vorliegend in Führungsschienenform ausgebildeten Blendenführung 53 sind die im Halterungsbereich der Vorformlinge 1 beweglich an den Kettengliedern 33 gelagerten Strahlungsblenden 41 steuerbar. Zur Steuerung der Strahlungsblenden 41 laufen Blendenhebel 44 in einer Führungsnut der Führungsschiene 53. Die Blendenhebel 44 sind dafür zum Beispiel mittels Steuergestänge, wie zum Beispiel mit einer Drehwelle drehfest mit den Strahlungsblenden 41 verbunden. Bei einer Verdrehung des Blendenhebels 44 gegenüber dem Kettenglied 33 folgt die Strahlungsblende 41 zwangsgeführt der Verdrehbewegung. Die Strahlungsblenden sind somit relativ gegenüber den Kettengliedern 33 verdrehbar.

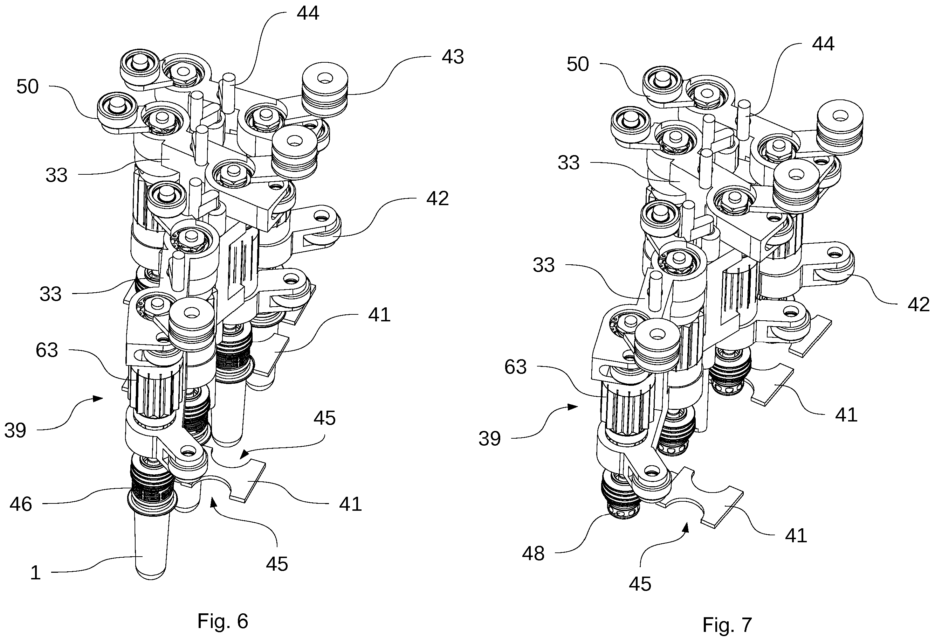

Die Hebelarme der Blendenheben 44 sind in Längsnuten der Blendenführung 53 geführt. Sofern die Kettenglieder 33, wie in den Fig. 6 und 7 gezeigt, zueinander verdreht werden, zum Beispiel durch eine geeignete Kurvenführung der Führungsschienen 51 und/oder 52, werden die Strahlungsblenden 41 durch einen geeigneten Verlauf der Blendenführung 53 relativ gegenüber den Kettengliedern 33 verdreht. Dadurch kann die in der Faltstellung die Zwischenräume zwischen zwei in einer Reihe hintereinander folgend transportierten Vorformlingen 1 verschließenden Strahlungsblende 41 beim Übergang der Förderkette F aus einer Faltstellung in eine Streckstellung kollisionsfrei von den Vorformlingen 1 entfernt werden.

Die Figuren 6 und 7 zeigen die Teilbereiche der Förderkette 11 aus den Figuren 4 und 5 aus einer anderen Perspektive von schräg oben. Zur besseren Übersichtlichkeit sind die Führungsschienen 51 und 52 sowie die Blendenführung 53 nicht gezeichnet. In den Figuren 6 und 7 sind die in den Figuren 4 und 5 gezeigten Teilbereiche der Förderkette F beim Übergang von einer Faltstellung in eine Streckstellung gezeigt. In der Faltstellung sind die an den Handhabungsmitteln 39 der Kettenglieder 33 gehalterten Vorformlinge 1 zweireihig entlang des Transportweges geführt. In der Streckstellung sind die Vorformlinge 1 einreihig entlang des Transportweges geführt. Wie sich im Vergleich der Figuren leicht erkennen lässt, ist der Abstand zweier hintereinander in einer Reihe geführten Vorformlinge beim zweireihigen Transport in der Faltstellung deutlich geringer als beim einreihigen Transport der Vorformlinge in der Streckstellung. Vorzugsweise werden die Vorformlinge im Bereich einer Heizstrecke 24 einer Heizrichtung H zweireihig transportiert.

Gemäß dem vorliegenden Ausführungsbeispiel sind die Abstände zwischen den Vorformlingen im zweireihigen Transport möglichst klein gehalten, was verschiedene Vorteile bietet. Die geringen Abstände führen zum Beispiel dazu, dass möglichst wenig Strahlungsenergie, die beim Transport der Vorformlinge 1 im Bereich von Heizstrahlern 30 der Heizstrecke 24 auf den Körperbereich des Vorformlings 1 unterhalb seines Stützrings 47 einwirkt, in lotrechte Richtung nach oben hin verloren geht. Um den Verlust von Strahlungsenergie weiter einzudämmen, kann wie abgebildet, vorgesehen sein Strahlungsblenden 41 an den Kettengliedern 33 anzuordnen, die beim zweireihigen Transport der Vorformlinge 1 die Zwischenräume zwischen zwei hintereinander folgenden Vorformlingen 1 jeder einzelnen Reihe weitgehend schließen.

Bei dem vorliegenden Ausführungsbeispiel ist daran gedacht, dass die Strahlungsblenden 41 beweglich, insbesondere drehgelagert zumindest an einigen Kettengliedern 33 angeordnet sind. Beim Übergang der Kettenglieder 33 von einer Streckstellung in eine Faltstellung bzw. umgekehrt, können die Strahlungsblenden 41 mittels als Hebel ausgeführten Blendenführungsmitteln 53 bewegt werden, sodass die Strahlungsblenden 41 in eine Freigabestellung bewegbar sind, in der sie die Zwischenräume zwischen zwei in einer Reihe hintereinander geführten Vorformlinge 1 freigegeben. Auf gleiche Weise können die Strahlungsblenden 41 in eine Sperrstellung bewegt werden können, in der sie die Zwischenräume zwischen zwei in einer Reihe transportierten Vorformlinge 1 wie erläutert weitgehend versperren.

Wie gezeigt, können die Strahlungsblenden 41 plattenartig ausgebildet sein und jeweils zwei an gegenüberliegenden Kanten, konkav in das Material der Strahlungsblende 41 eingearbeitete Rezesse 45 aufweisen. In den Figuren 4 und 5 sind die Strahlungsblenden 41 in der Sperrstellung gezeigt, in der sie die Zwischenräume zwischen hintereinander geführten Vorformlingen 1 versperren. Dabei sind jeweils zwei Strahlungsblenden 41 so zusammengeführt, dass sich die Rezesse 45 dieser zwei zusammengeführten Strahlungsblenden 41 gegenüberliegen und zusammen einen etwa kreisförmigen Ausschnitt bilden, der einen Durchlass für den Korpus eines Vorformlings 1 bereitstellt.

Die Rezesse 45 der Strahlungsblenden 41 umgreifen den Vorformling 1 vorzugsweise unterhalb seines Stützrings 47 jeweils bereichsweise in einem Winkelbereich. Vorzugsweise sind die Rezesse 45 derart ausgebildet, dass die Strahlungsblenden 41 in ihrer Sperrstellung den Stützring 47 in Längsrichtung des Vorformlings 1 gesehen überlappen. Damit werden die Zwischenräume zwischen den Vorformlingen 1 besonders gut geschlossen. Außerdem kann insbesondere ein ungewolltes Aufheizen der Stützringe 47 beim Transport durch die Heizstrecke 24 verhindert werden.

Wie erwähnt, sind die Vorformlinge 1 für den Transport entlang des Transportweges T der Heizvorrichtung H (vgl. Figur 3) an Handhabungsmitteln 39 der Kettenglieder 33 gehaltertet. Die Handhabungsmittel 39 weisen vorliegend als Haltedorne ausgeführte Halteeinrichtungen 48 auf, die - wie eingangs erläutert - für die passive oder aktive Halterung der Vorformlinge ausgebildet sein kann.

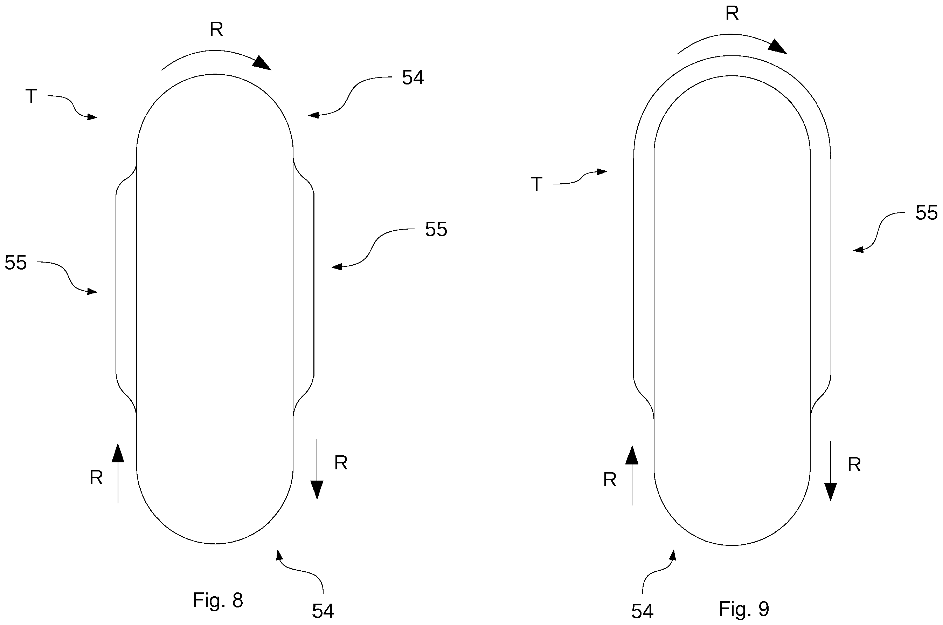

Die Figuren 8 und 9 zeigen mögliche Streckenführungen beim Transport der Vorformlinge 1 entlang eines Transportweges T einer Heizvorrichtung H. Die Transportrichtung ist mit Pfeilen R angedeutet. In den Bereichen 54 ist ein einreihiger Transport der Vorformlinge 1 und in den Bereichen 55 ist ein zweireihiger Transport der Vorformlinge 1 vorgesehen.

Gemäß der Streckenführung aus Figur 8 können zwei separate Bereiche 55 für den zweireihigen Transport vorgesehen sein. Die Bereiche 55 sind gemäß dem Beispiel aus Figur 8 durch zwei Bereiche 54 getrennt, in denen ein einreihiger Transport der Vorformlinge 1 vorgesehen ist.

Im Unterschied zum Beispiel aus Figur 8 ist nach Figur 9 jeweils ein Bereich 55 für den zweireihigen Transport und ein einziger Bereich 54 für den einreihigen Transport der Vorformlinge 1 vorgesehen. Die schematischen Darstellungen der Figuren 8 und 9 zeigen einen typischen, zwei geradlinige Strecken und zwei Umlenkbereiche aufweisenden Verlauf eines Transportweges T einer Förderkette F durch eine Heizvorrichtung H (vgl. Figur 3). Wie zum Beispiel in Figur 3 angedeutet, können sich in den geradlinig geführten Bereichen der Transportstrecke T die Heizstrecken 24 befinden, die durch einzelne Heizeinrichtungen 30 ausgebildet werden. Diese Heizeinrichtungen 30 können zum Beispiel Infrarotstrahler aufweisen, die zur Temperierung der Vorformlinge 1 bei ihrem Transport durch die Heizstrecke 24 dienen.

Wie in den Figuren 8 und 9 gezeigt, ist vorzugsweise vorgesehen, dass die Vorformlinge 1 insbesondere im Bereich der geradlinigen Führung des Transportweges T zwischen gegenüberliegenden Kurvenbereichen zweireihig geführt sind. Je nach Anwendungsfall kann wie zum Beispiel in Figur 9 vorgesehen sein, dass die Vorformlinge 1 in einem Kurvenbereich zwischen zwei geradlinig ausgebildeten Bereichen des Transportweges T zweireihig transportiert werden.

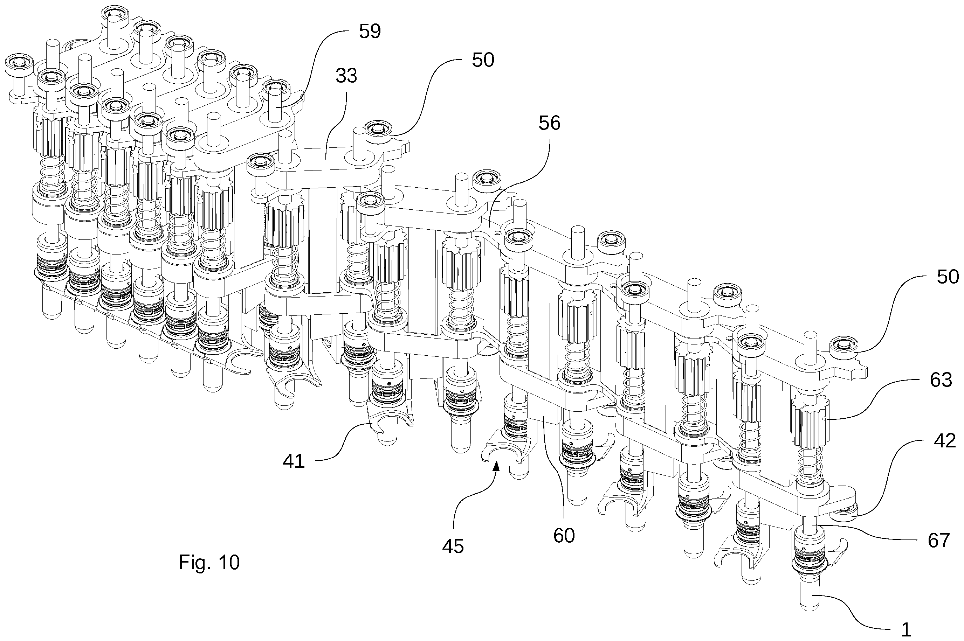

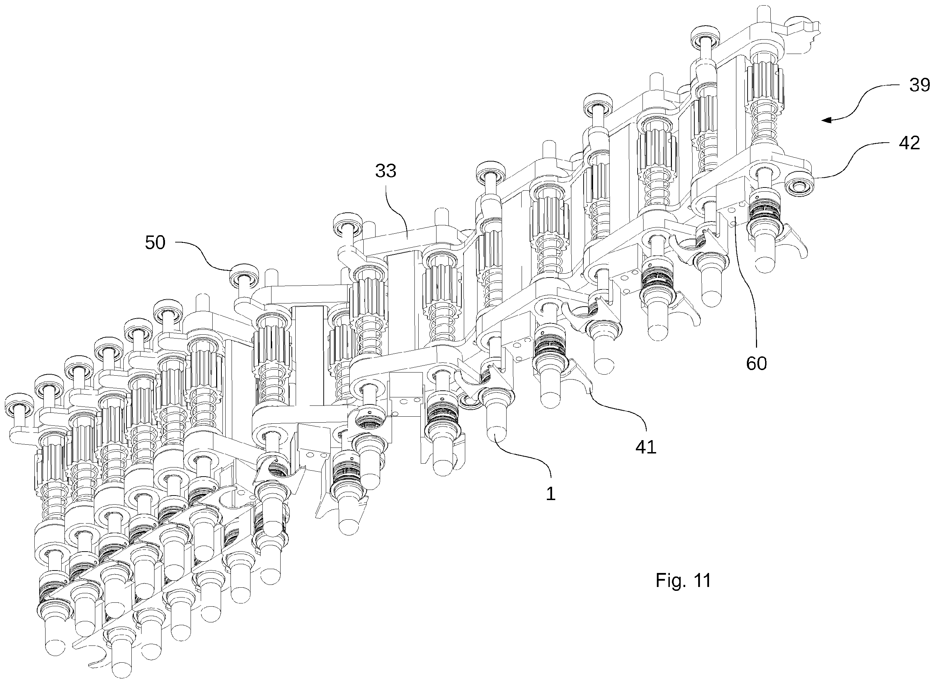

Die Figuren 10 bis 15 zeigen eine weitere Ausführungsform der erfindungsgemäßen Förderkette F schematisiert in unterschiedlichen Darstellungen. Zur besseren Übersichtlichkeit sind Elemente, die auch für das erste Ausführungsbeispiel der Figuren 4 bis 7 gelten, in den Zeichnungen weggelassen. Insbesondere können auch in diesem Ausführungsbeispiel schienenförmig ausgebildete Führungsmittel 51, 52 zur Steuerung der Förderkette F vorgesehen sein.

Im Unterschied zu dem Ausführungsbeispiel aus den Figuren 4 bis 7 sind neben den Kettenglieder 33 mit daran getragenen Handhabungsmitteln 39 der Förderkette F zusätzliche Zwischenkettenglieder 56 vorgesehen, die die Ketteglieder 33 miteinander gelenkig verbinden. Die Figuren 10 bis 14 zeigen einen Teil einer erfindungsgemäßen Förderkette F beim Übergang von einer Faltstellung 57 in eine Streckstellung 58. Es ist deutlich erkennbar, dass die an den Handhabungsmitteln 39 der Kettenglieder 33 getragenen Vorformlinge 1 im Bereich der Streckstellung 58 einreihig in Transportrichtung hintereinander transportiert werden und im Bereich der Faltstellung 57 zweireihig in zwei bezüglich der Transportrichtung parallel zueinander verlaufenden Reihen transportiert werden. Deutlich erkennbar ist auch der geringe Abstand zwischen zwei aufeinanderfolgenden Vorformlingen 1 einer Reihe im Bereich der Faltstellung 57 im Vergleich zu dem dagegen größeren Abstand zwischen zwei aufeinanderfolgenden Vorformlingen 1 im Bereich der Streckstellung 58.

Ein weiterer Unterschied zu der Ausführungsform gemäß den Figuren 4 bis 7 ist die starre bzw. unbewegliche Anordnung von Strahlungsblenden 41 an den Kettengliedern 33. Die Strahlungsblenden 41 weisen wie auch in dem Ausschuss Beispiel nach den Figuren 4 bis 7 jeweils zwei Rezesse 45 auf, die auf gegenüberliegenden Seiten der plattenförmig ausgebildeten Elemente 41 in das Material eingearbeitet sind. Wie die Figuren 10 bis 13 deutlich erkennen lassen, sind an den Kettengliedern 33 jeweils zwei Strahlungsblenden 41 vorgesehen. Im Unterschied zu dem Ausführungsbeispiel aus den Figuren 4 bis 7 wird die Sperrstellung der Strahlungsblenden 41 allein durch die Faltbewegung der Förderkette F eingenommen. Im Bereich der Faltstellung beim zweireihigen Transport der Vorformlinge 1 befinden sich die Strahlungsblenden 41 in der Sperrstellung, in der sie den Zwischenraum zwischen zwei aufeinanderfolgenden Vorformlingen 1 versperren. In der Streckstellung 58 befinden sich die Strahlungsblenden 41 in einer Freigabestellung, in der die Vorformlinge kollisionslos aus dem Eingriff der Strahlungsblenden 41 entnommen werden können.

In der Sperrstellung Umgreifen zwei gegenüberliegende Strahlungsblenden 41 mit ihren zueinanderweisenden Rezessen 45 jeweils einen Vorformlingen 1. Wegen ihrer starren Anordnung an den Kettengliedern 33 wird die relative Position der Strahlungsblenden 41 eines Kettengliedes 33 gegenüber den an demselben Kettenglied 33 getragenen Vorformlinge 1 beim Übergang von einer Faltstellung 57 in eine Streckstellung 58 nicht verändert.

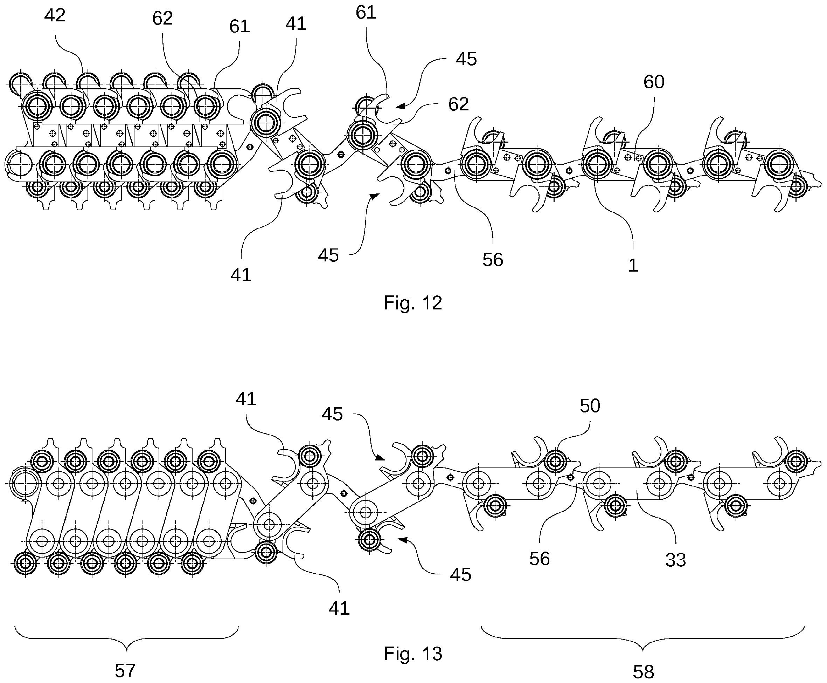

Die Kettenglieder 33 tragen jeweils zwei Vorformlinge 1, wobei ein erster Vorformling 1 beim Übergang aus einer Faltstellung 57 in eine Streckstellung 58 aus dem Eingriffsbereich einer Strahlungsblende 41 des in Streckrichtung nachfolgenden Kettengliedes 33 herausgeführt, also zwangsgeführt aus dem Umgriff der nachfolgenden Strahlungsblende 41 herausgezogen wird. Der zweite an diesem Kettenglied 33 getragene Vorformling 1 wird beim Übergang in die Streckstellung 58 dadurch freigegeben, dass die zugeordnete Strahlungsblende 41 des in Streckrichtung vorauseilenden Kettengliedes 33 von diesem Vorformling 1 weggeführt wird. Dieses Prinzip ist gut in Figur 12 erkennbar.

Die Rezesse 45 sind etwa zangenartig ausgebildet, wobei zwei seitliche Wangenelemente als Umgriffbereiche zum bereichsweisen Umgriff der Vorformlinge 1 ausgeformt sind. Für eine weitgehende Abdeckung des Zwischenraumes zwischen zwei aufeinanderfolgenden Vorformlingen 1 in der Sperrstellung der Strahlungsblenden 41 ist bei dem Ausführungsbeispiel der Fig. 10 bis 15 vorgesehen, dass der freigebende Rezess 45 unsymmetrisch zum gegenüberliegenden Rezess 45 der gleichen Strahlungsblende 41 ausgebildet ist. Insbesondere ist vorgesehen, dass der freigegebene Rezess 45 schief in den plattenförmigen Körper der Strahlungsblende 41 eingearbeitet ist, derart dass der freigegebene Rezess 45 einen ersten vorstehenden Umgriffbereich 61 und einen zweiten gegenüberliegenden zurückstehenden Umgriffbereich 62 ausbildet.

Wie insbesondere die Figur 12 zeigt, ist vorgesehen, dass der zurückstehende Umgriffbereich 62 in der Faltstellung 57 der Förderkette F jedenfalls in einem geradlinig verlaufenden Transportabschnitt des Transportweges T unmittelbar an einen gegenüberliegenden Umgriffbereich eines Rezesses 45 einer nachfolgenden Strahlungsblende 41 angrenzt. Der hakenförmig geformte vorstehende Umgriffbereich 61 kann hingegen derart ausgebildet sein, dass er jedenfalls in einem geradlinig verlaufenden Transportabschnitt des Transportweges T mit einem Umgriffbereich eines gegenüberliegenden Rezesses 45 einer nachfolgenden Strahlungsblende 41 überlappt. Das kann insbesondere durch Materialaussparungen an der Oberfläche des freigegebenen Rezesses 45 und/oder durch Materialaussparungen an der Unterseite des stationären Rezesses 45 einer Strahlungsblende 41 erreicht werden. Die schiefe Ausformung des freigegebenen Rezesses ermöglicht ein kollisionsfreies Hereinführen bzw. Herausführen eines Vorformlings 1 in beziehungsweise aus den freigegebenen Rezess 45 beim Übergang von einer Streckstellung 58 in eine Faltstellung 57 der Transportkette T bzw. beim Übergang von einer Faltstellung 57 in eine Streckstellung 58. Die Materialaussparungen an der Oberseite beziehungsweise der Unterseite der Strahlungsblenden 41 im Umgriffbereich des freigegebenen bzw. des stationären Rezesses 45 können zudem derart ausgeprägt sein, dass genügend Bewegungsraum gegeben ist, um den zweireihigen Transport der Vorformlinge auch im Kurvenbereich einer Transportstrecke T zu ermöglichen. Der Überlapp zwischen dem vorstehenden Umgriffbereich 61 mit der stationären Strahlungsblende 41 kann in der Kurvenführung variieren.

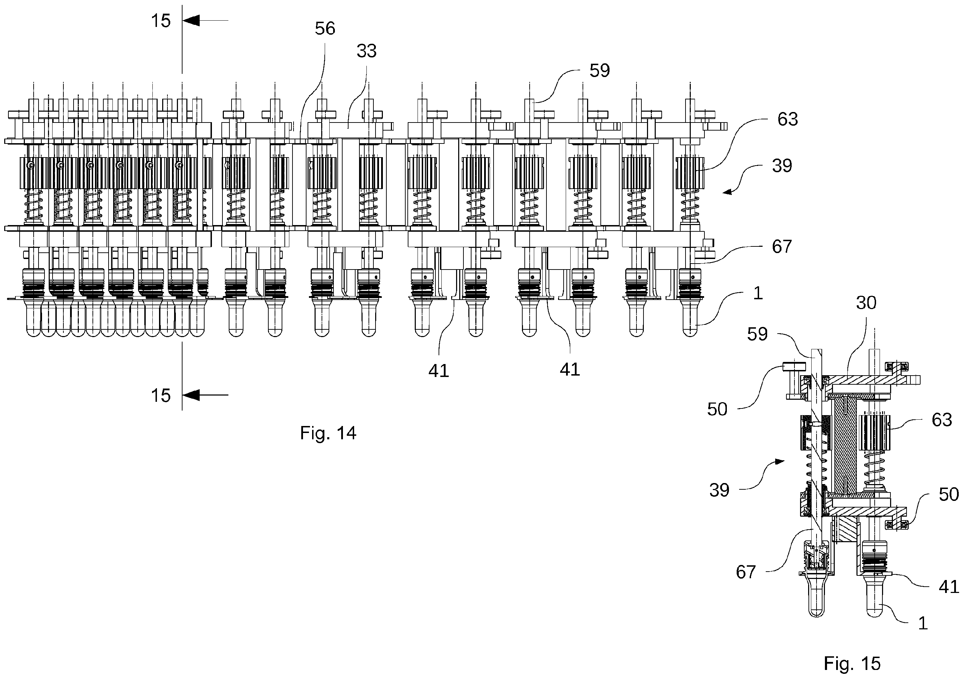

Figur 14 zeigt den Teilbereich der Förderkette F aus den Figuren 10 bis 13 in einer Seitenansicht. Figur 15 zeigt einen Schnitt durch ein Kettenglied 33 entlang der Schnittlinie 15 - 15 aus Figur 14. Fig. 14 veranschaulicht die hohe Transportdichte der Vorformlinge 1 im Bereich der Faltstellung verglichen zu der deutliche geringeren Transportdichte der Vorformlinge 1 im Bereich der Streckstellung. Die in diesem Ausführungsbeispiel am oberen Ende der Handhabungsmittel 39 angeordneten Führungsstifte 59 können zur Führung der Kettenglieder 33 beim Transport durch die Heizvorrichtung H dienen. Die Führungsstifte 59 können auch zur Steuerung der Handhabungsmittel 39 dienen. Die Führungsstifte 59 sind vorliegend Teil der die Vorformlinge tragenden Haltedorne. Vorstellbar ist, dass durch Druck auf einen Führungsstift 59 - beispielsweise durch eine stationär zur Förderkette angeordneten Steuerkurve (nicht gezeigt) - die Halterung der Vorformlinge 1 am Haltedorn gelöst wird.

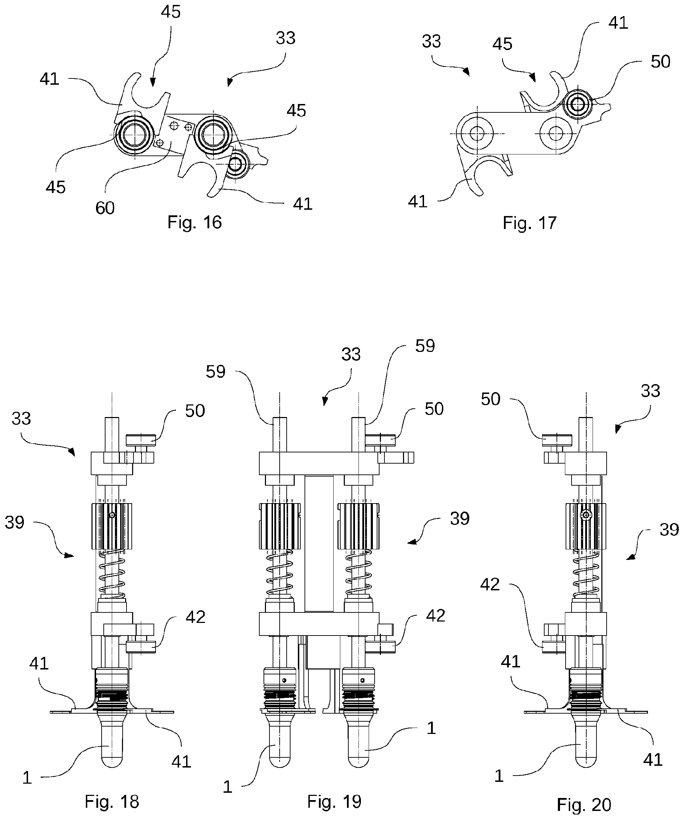

Die Figuren 16 bis 24 zeigen ein Kettenglied 33 aus dem Förderkettenteil der Figuren 10 bis 14 in unterschiedlichen Ansichten. Deutlich erkennbar sind zwei jeweils mit einem Transportdorn ausgestattete Handhabungsmittel 39 an dem Kettenglied 33 angeordnet. An den Transportdornen sind in Lotrichtung unten Vorformlinge 1 gehaltertet. Die Strahlungsblenden 41 sind stationär, also unbeweglich an den Kettengliedern 33 angeordnet.

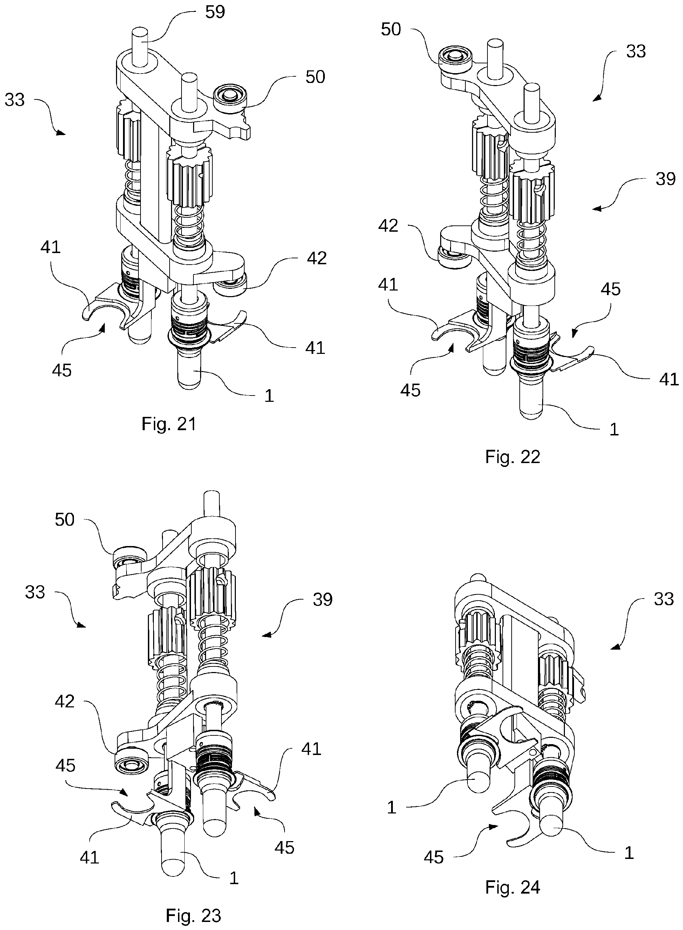

Deutlich zu erkennen sind in der perspektivischen Ansicht der Figur 21 Materialaussparungen an der Oberfläche der Strahlungsblende 41 im Bereich der gegenüberliegenden Umgriffbereiche 61 und 62. In der perspektivischen Darstellung von unten in Figur 23 sind die komplementär zum hakenartigen Umgriffbereich 61 ausgebildeten Aussparungen an der Unterseite der Strahlungsblende 41 im Bereich des dem freigebenden Rezess 45 gegenüberliegenden Rezesses 45 gezeigt.

Die Strahlungsblenden 41 sind an einem Tragelement 60 montiert. Die Strahlungsblenden 41 können einstückig bzw. integral mit dem Tragelement 60 ausgebildet sein. Für einen modularen Aufbau können die Strahlungsblenden 41 jeweils auch lösbar an dem Tragelement 60 befestigt sein. Das Tragelement 60 ist vorzugsweise lösbar - beispielsweise mit einer Schraubbefestigung - an dem Tragrahmen des Kettengliedes 33 befestigt.

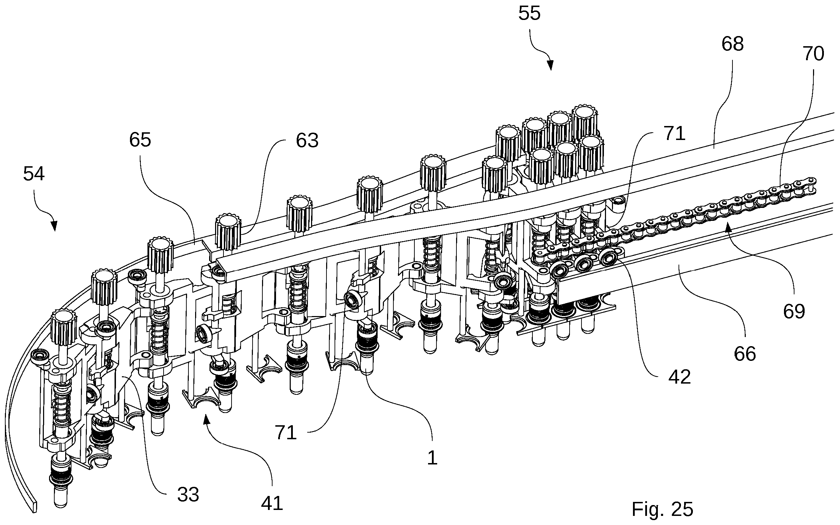

In den Figuren 25-27 ist eine als Förderkette ausgebildete Transporteinrichtung beim Übergang vom zweireihigen Transportbereich 55 in den einreihigen Transportbereich 54 gezeigt. In diesen Ausführungsbeispielen ist eine als Schleppkette ausgebildete Fördereinrichtung 69 gezeigt, die die als Kettenglieder ausgebildeten Transportmittel 33 im Bereich der zweireihigen Führung antreibt. Die Schleppkette weist dafür als Kettenglieder ausgebildete Mitnehmer 70 auf, die in an den Kettengliedern 33 befestigten Mitnahmeelementen 71 angreifen.

Die Kettenglieder 33 weisen in ihrem Schulterbereich Führungsrollen 50 auf, die in Führungsschienen 68 laufen. Jedes zweite Kettenglied trägt eine seitliche Stützrolle 42, die zumindest im zweireihigen Transportbereich 55 auf einer Führungsschiene 66 laufen, um die Förderkette in lotrechter Richtung gegen die Schwerkraft abstützen.

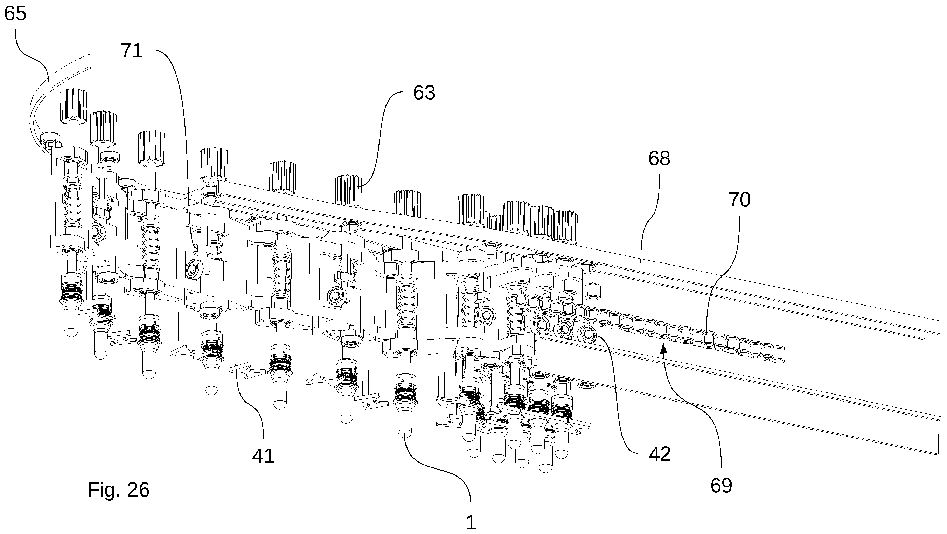

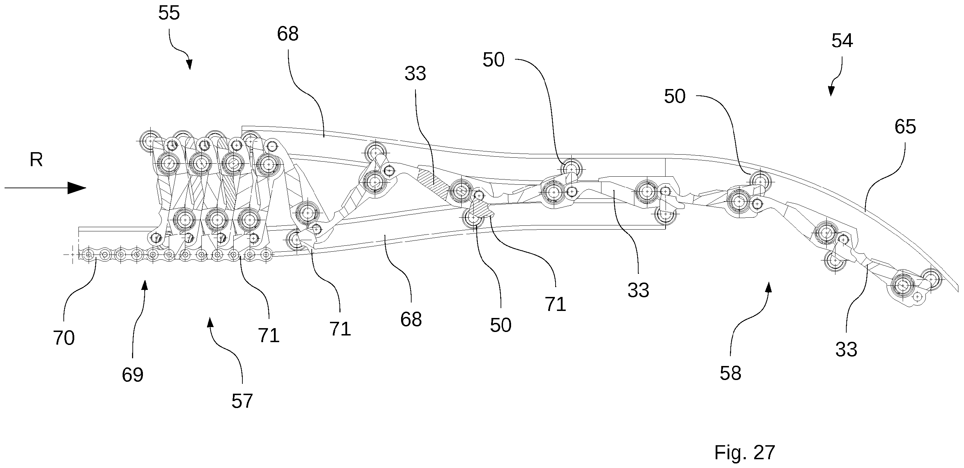

In Figur 27 ist eine Schnittdarstellung der Förderkette aus den Figuren 25 und 26 mit Blick in lotrechter Richtung von unten gezeigt. Deutlich zu erkennen, trägt jedes zweite Kettenglied 33 ein Mitnahmeelement 71. Deutlich zu erkennen ist zudem, dass die Mitnahmeelemente 71 im zweireihigen Transportbereich 55 in der Faltstellung 57 der Förderkette jeweils mit Mitnehmern 70 der als Schleppkette ausgebildeten Fördereinrichtung 69 in Eingriff stehen. Beim Antrieb der Schleppkette 69 in Transportrichtung R werden die Kettenglieder 33 vorangetrieben. Im Übergangsbereich zwischen der Faltstellung 57 und der Streckstellung 58 verringert sich der Abstand der Führungsschienen 68 zueinander. Dadurch werden die Führungsrollen 50 der Kettenglieder 33 aufeinander zugeführt, was die Zwangsführung der Förderkette von einer Faltstellung 57 in eine Streckstellung 58 unterstützt.

**Bezugszeichenliste**

| | | | |
|---|---|---|---|
| 1 | Vorformling | 34 | Umlenkrad |
| 2 | Behälter | 35 | Übergaberad |
| 3 | Blasstation | 36 | Umlenkrad |
| 4 | Blasform | 37 | Übergaberad |
| 5 | erste Formhälfte | 38 | Übergaberad |
| 6 | zweite Formhälfte | 39 | Handhabungsmittel |
| 7 | Bodenteil | 40 | Verriegelungseinrichtung |
| 8 | Hubvorrichtung | 41 | Strahlungsblende |
| 9 | Halteelement | 42 | Stützrolle |
| 10 | Anschlusskolben | 43 | Führungsrolle |
| 11 | Reckstange | 44 | Blendenhebel |
| 12 | Zylinder | 45 | Rezess der Strahlungsblende |
| 13 | Primärzylinder | 46 | Mündungsabschnitt |
| 14 | Boden | 47 | Stützring |
| 15 | Schlitten | 48 | Halteeinrichtung |
| 16 | Sekundärzylinder | 49 | Seitenführung |
| 17 | Führungsrolle | 50 | Führungsrolle |
| 18 | Führungselement | 51 | Führungsmittel |
| 19 | erster Träger | 52 | Führungsmittel |
| 20 | zweiter Träger | 53 | Blendenführungsmittel |
| 21 | Mündungsabschnitt | 54 | Einreihiger Transportbereich |
| 22 | Gewindeeinsatz | 55 | Zweireihiger Transportbereich |
| 23 | Behälterblase | 56 | Zwischenglied |
| 24 | Heizstrecke | 57 | Faltstellung |
| 25 | Blasrad | 58 | Streckstellung |
| 26 | Vorformlingseingabe | 59 | Führungsstift |
| 27 | Übergaberad | 60 | Tragelement |
| 28 | Übergaberad | 61 | vorstehender Umgriffbereich |
| 29 | Übergaberad | 62 | zurückstehender Umgriffbereich |
| 30 | Heizstrahler | 63 | Kopplungselement |
| 31 | Gebläse | 64 | Haltekopf |
| 32 | Ausgabestrecke | 65 | Führungsschiene |
| 33 | Transportmittel | 66 | Führungsschiene |
| | | 67 | Haltedorn |
| | | 68 | Führungsschiene |
| | | 69 | Schleppkette |
| | | 70 | Mitnehmer |
| | | 71 | Mitnahmeelemente |
| | | B | Blasstation |
| | | H | Heizvorrichtung |
| | | T | Transportweg |
| | | F | Förderkette |
| | | R | Transportrichtung |

## Patentansprüche

1. Heizvorrichtung (H) mit mindestens einer Heizstrecke (24) zur thermischen Konditionierung von aus thermoplastischem Material bestehenden Vorformlingen (1) auf ein für eine Blasumformung geeignetes Temperaturprofil, wobei die Heizvorrichtung (H) eine Transporteinrichtung zum Transport der Vorformlinge (1) entlang eines Transportweges (T) der Heizvorrichtung (H) aufweist, und wobei die Transporteinrichtung Handhabungsmittel (39) zur Halterung und Hantierung jeweils eines einzelnen Vorformlings (1) aufweist, **dadurch gekennzeichnet, dass** die Transporteinrichtung derart ausgebildet und eingerichtet ist, dass die Vorformlinge (1) in mindestens einem ersten Abschnitt des Transportweges (T) in einer einzigen Reihe geführt sind und in mindestens einem zweiten Abschnitt des Transportweges in zwei benachbarten Reihen geführt sind, wobei wenigstens eine der Heizstrecken (24) in einem der zweiten Abschnitte angeordnet ist und die Heizstrecke (24) mindestens eine Heizeinrichtung (30) mit zwei in Transportrichtung (R) der Vorformlinge (1) parallel verlaufenden Heizgassen umfasst, wobei jede Heizgasse jeweils einer der beiden benachbarten Reihen von Vorformlingen (1) zugeordnet ist, wobei die Heizeinrichtung (30) Heizstrahler zur Temperaturkonditionierung der Vorformlinge (1) aufweist und die Heizstrahler zwischen den beiden Heizgassen angeordnet sind .

2. Heizvorrichtung (H) nach Anspruch 1, **dadurch gekennzeichnet, dass** die Heizvorrichtung (H) mindestens zwei entlang des Transportweges (T) beabstandete Heizstrecken (24) aufweist, und wobei insbesondere zwischen den beiden Heizstrecken (24) einer der ersten Abschnitte des Transportweges (T) ausgebildet ist.

3. Heizvorrichtung (H) nach einem der Ansprüche 1 oder 2, **dadurch gekennzeichnet, dass** die Heizvorrichtung (H) einen ersten Übergabebereich zur Aufnahme von Vorformlingen (1) an jeweils ein Handhabungsmittel (39) sowie einen zweiten Übergabebereich zur Abgabe der Vorformlinge (1) von den Handhabungsmitteln (39) umfasst, wobei der erste Übergabebereich und/oder der zweite Übergabebereich in einem der ersten Abschnitte angeordnet ist.

4. Heizvorrichtung (H) nach einem der Ansprüche 1 bis 3, **dadurch gekennzeichnet, dass** die Handhabungsmittel (39) jeweils einen quer zur Transportrichtung (R) verschiebbar gelagerten Haltedorn (67) umfassen, wobei der Haltedorn (67) einen in einen Mündungsbereich (21) eines Vorformlings (1) eingreifenden Haltekopf (48) umfasst.

5. Heizvorrichtung (H) nach einem der Ansprüche 1 bis 4, **dadurch gekennzeichnet, dass** die Handhabungsmittel (39) jeweils ein Kopplungselement (63) für eine Drehung eines mittels des Handhabungsmittels (39) gehalterten Vorformlings (1) aufweisen, wobei im Bereich wenigstens einer der Heizstrecken (24) eine mit den Kopplungselementen (63) zusammenwirkende Drehantriebsvorrichtung vorgesehen ist.

6. Heizvorrichtung (H) nach einem der Ansprüche 1 bis 5, **dadurch gekennzeichnet, dass** die Transporteinrichtung eine entlang des Transportweges (T) umlaufende Förderkette (F) aufweist, die mehrere drehgelenkig miteinander verbundene Kettenglieder (33) aufweist und die Handhabungsmittel (39) trägt, wobei sich die Kettenglieder (33) der Förderkette (F) in den ersten Abschnitten des Transportweges (T) in einer Streckstellung befinden und wobei sich die Kettenglieder (33) der Förderkette (F) in den zweiten Abschnitten des Transportweges (T) in einer Faltstellung befinden.

7. Heizvorrichtung (H) nach Anspruch 6, **dadurch gekennzeichnet, dass** die Transporteinrichtung in einem Übergangsabschnitt zwischen einem der ersten Abschnitte des Transportweges (T) und einem der zweiten Abschnitte des Transportweges (T) angeordnete Führungsmittel zur Zwangsführung der Kettenglieder (33) zwischen einer Streckstellung innerhalb des ersten Abschnitts und einer Faltstellung innerhalb des zweiten Abschnitts umfasst.

8. Heizvorrichtung (H) nach Anspruch 6 oder 7, **dadurch gekennzeichnet, dass** die Transporteinrichtung in einem der ersten und/oder einem der zweiten Abschnitte des Transportweges (T) angeordnete Führungsmittel zur Zwangsführung der Kettenglieder umfasst, um die Kettenglieder innerhalb des ersten Abschnitts in der Streckstellung bzw. innerhalb des zweiten Abschnitts in der Faltstellung zu halten.

9. Heizvorrichtung (H) nach einem der Ansprüche 6 bis 8, **dadurch gekennzeichnet, dass** die Förderkette (F) ebenso viele Kettenglieder (33) aufweist wie die Transporteinrichtung Handhabungsmittel (39), wobei insbesondere jeweils ein Handhabungsmittel (39) an einem Kettenglied (33) gehaltert ist oder jeweils ein Handhabungsmittel (39) koaxial zu einer Drehachse eines Drehgelenkes zwischen zwei Kettengliedern (33) gehaltert ist.

10. Heizvorrichtung (H) nach einem der Ansprüche 6 bis 9, **dadurch gekennzeichnet, dass** die Transporteinrichtung Strahlungsblenden (41) umfasst, die derart von der Förderkette getragen werden, dass sie zumindest in wenigstens einer der Heizstrecken (24), insbesondere einer Heizstrecke (24) innerhalb eines zweiten Abschnitts des Transportweges (T), zwischen zwei Handhabungsmitteln (39) zur Anordnung kommen.

11. Heizvorrichtung (H) nach einem der Ansprüche 6 bis 10, **dadurch gekennzeichnet, dass** die Transporteinrichtung eine angetriebene Fördereinrichtung (69) mit umlaufenden Mitnehmern (70) aufweist, wobei wenigstens einige der Kettenglieder (33) der Förderkette jeweils ein Mitnahmeelement (71) aufweisen, wobei in wenigstens einem der zweiten Abschnitte des Transportweges (T) mehrere Mitnahmeelemente (71) mit jeweils einem Mitnehmer (70) bewegungsgekoppelt in Eingriff sind.

12. Blasmaschine umfassend eine Heizvorrichtung (H) gemäß einem der Ansprüche 1 bis 11 mit mindestens einer Heizstrecke (24) zur thermischen Konditionierung von aus thermoplastischem Material bestehenden Vorformlingen (1) auf ein für eine Blasumformung geeignetes Temperaturprofil sowie umfassend eine Blasumformvorrichtung (3) zur biaxialen Blasumformung des Vorformlings (1) in einen Behälter (2).

13. Verfahren zum Transport von aus thermoplastischem Material bestehenden Vorformlingen (1) entlang eines Transportweges (T) einer Heizvorrichtung (H) mit mindestens einer Heizstrecke (24) zur thermischen Konditionierung der Vorformlinge (1) auf ein für eine Blasumformung geeignetes Temperaturprofil, **dadurch gekennzeichnet, dass** die Vorformlinge (1) in mindestens einem ersten Abschnitt des Transportweges (T) in einer einzigen Reihe geführt werden und in mindestens einem zweiten Abschnitt des Transportweges (T) in zwei benachbarten Reihen geführt werden, wobei die Vorformlinge (1) im Bereich wenigstens einer der Heizstrecken (24) in zwei benachbarten Reihen transportiert werden und die Vorformlinge (1) in der mindestens einen Heizstrecke (24) durch mindestens eine Heizeinheit (30) mit zwei Heizgassen hindurch geführt werden, wobei jeweils eine der beiden benachbarten Reihen von Vorformlingen (1) in jeweils einer Heizgasse geführt wird die Heizeinrichtung (30) Heizstrahler zur Temperaturkonditionierung der Vorformlinge (1) aufweist, die zwischen den beiden Heizgassen angeordnet sind .

14. Verfahren nach Anspruch 13, **dadurch gekennzeichnet, dass** die Vorformlinge (1) zwischen zwei entlang des Transportweges (T) beabstandeten Heizstrecken (24) in einer einzigen Reihe geführt werden.

15. Verfahren nach einem der Ansprüche 13 oder 14, **dadurch gekennzeichnet, dass** die Vorformlinge (1) in einem ersten Übergabebereich in dem Vorformlinge (1) an Handhabungsmittel (39) übergeben werden und/oder in einem zweiten Übergabebereich in dem Vorformlinge (1) von Handhabungsmitteln (39) abgegeben werden in einer einzigen Reihe transportiert werden.

## Claims

1. A heating device (H) comprising at least one heating section (24) for thermally conditioning preforms (1) consisting of thermoplastic material to a temperature profile suitable for a blow moulding, wherein the heating device (H) has a transport means for transporting the preforms (1) along a transport path (T) of the heating device (H), and wherein the transport means has handling means (39) for holding and handling a respective individual preform (1), **characterised in that** the transport means is formed and set up in such a way that, in at least one first portion of the transport path (T), the preforms (1) are guided in a single row, and, in at least one second portion of the transport path, are guided in two adjacent rows, wherein at least one of the heating sections (24) is arranged in one of the second portions, and the heating section (24) comprises at least one heating means (30) comprising two heating channels running parallel in the transport direction (R) of the preforms (1), wherein each heating channel is in each case assigned to one of the two adjacent rows of preforms (1), wherein the heating means (30) has radiant heaters for temperature-conditioning the preforms (1), and the radiant heaters are arranged between the two heating channels.

2. The heating device (H) according to Claim 1, **characterised in that** the heating device (H) has at least two heating sections (24), which are spaced apart along the transport path (T), and wherein one of the first portions of the transport path (T) is in particular formed between the two heating sections (24).

3. The heating device (H) according to any one of the Claims 1 or 2, **characterised in that** the heating device (H) comprises a first transfer region for receiving preforms (1) to a respective handling means (39), as well as a second transfer region for delivering the preforms (1) from the handling means (39), wherein the first transfer region and/or the second transfer region is arranged in one of the first portions.

4. The heating device (H) according to any one of the Claims 1 through 3, **characterised in that** the handling means (39) each comprise a holding mandrel (67), which is supported so as to be displaceable transversely to the transport direction (R), wherein the holding mandrel (67) comprises a holding head (48) engaging with a mouth region (21) of a preform (1).

5. The heating device (H) according to any one of the Claims 1 through 4, **characterised in that** the handling means (39) each have a coupling element (63) for a rotation of a preform (1) held by means of the handling means (39), wherein a rotary drive device cooperating with the coupling elements (63) is provided in the region of at least one of the heating sections (24).

6. The heating device (H) according to any one of the Claims 1 through 5, **characterised in that** the transport means has a conveyor chain (F), which revolves along the transport path (T) and which has several chain members (33), which are pivotally connected to one another and which supports the handling means (39), wherein, in the first portions of the transport path (T), the chain members (33) of the conveyor chain (F) are in an extended position, and wherein, in the second portions of the transport path (T), the chain members (33) of the conveyor chain (F) are in a folded position.

7. The heating device (H) according to Claim 6, **characterised in that** the transport means has guide means arranged in a transfer portion between one of the first portions of the transport path (T) and one of the second portions of the transport path (T), for positively guiding the chain members (33) between an extended position within the first portion and a folded position within the second portion.

8. The heating device (H) according to Claim 6 or 7, **characterised in that** the transport means comprises guide means arranged in one of the first and/or one of the second portions of the transport path (T), for positively guiding the chain members, in order to hold the chain members in the extended position within the first portion or in the folded position within the second portion, respectively.

9. The heating device (H) according to any one of the Claims 6 through 8, **characterised in that** the conveyor chain (F) has the same number of chain members (33) as the transport means has handling means (39), wherein in particular one handling means (39) is in each case held at a chain member (33), or one handling means (39) is in each case held between two chain members (33) coaxially to an axis of rotation of a rotary joint.

10. The heating device (H) according to any one of the Claims 6 through 9, **characterised in that** the transport means comprises radiation shields (41), which are supported by the conveyor chain in such a way that they are arranged between two handling means (39) in at least one of the heating sections (24), in particular one heating section (24) within a second portion of the transport path (T).

11. The heating device (H) according to any one of the Claims 6 through 10, **characterised in that** the transport means has a driven conveying means (69) comprising revolving drivers (70), wherein at least some of the chain members (33) of the conveyor chain each have a driving element (71), wherein several driving elements (71) engage with a respective driver (70) in a motion-coupled manner in at least one of the second portions of the transport path (T).

12. A blow moulding machine comprising a heating device (H) according to any one of the Claims 1 through 11, comprising at least one heating section (24) for thermally conditioning preforms (1) consisting of thermoplastic material to a temperature profile suitable for a blow moulding, as well as comprising a blow moulding device (3) for biaxially blow moulding the preform (1) into a container (2).

13. A method for transporting preforms (1) consisting of thermoplastic material along a transport path (T) of a heating device (H) comprising at least one heating section (24) for thermally conditioning the preforms (1) to a temperature profile suitable for a blow moulding, **characterised in that**, in at least one first portion of the transport path (T), the preforms (1) are guided in a single row, and, in at least one second portion of the transport path (T), are guided in two adjacent rows, wherein, in the region of at least one of the heating sections (24), the preforms (1) are transported in two adjacent rows, and, in the at least one heating section (24), the preforms (1) are guided through at least one heating unit (30) comprising two heating channels, wherein a respective one of the two adjacent rows of preforms (1) is in each case guided in a heating channel, the heating means (30) has radiant heaters for temperature-conditioning the preforms (1), which are arranged between the two heating channels.

14. The method according to Claim 13, **characterised in that** the preforms (1) are guided in a single row between two heating sections (24), which are spaced apart along the transport path (T).

15. The method according to any one of the Claims 13 or 14, **characterised in that**, in a first transfer region, in which preforms (1) are transferred to handling means (39) and/or in a second transfer region, in which preforms (1) are delivered by handling means (39), the preforms (1) are transported in a single row.

## Revendications

1. Dispositif de chauffage (H) avec au moins une section de chauffage (24) pour le conditionnement thermique de préformes (1) en matériau thermoplastique de sorte à obtenir un profil de températures approprié au moulage par soufflage, le dispositif de chauffage (H) présentant un dispositif de transport pour le transport des préformes (1) le long d'un parcours (T) du dispositif de chauffage (H), et le dispositif de transport présentant des moyens de manipulation (39) respectivement destinés à maintenir et manipuler une préforme (1) individuelle, **caractérisé en ce que** le dispositif de transport est façonné et aménagé de façon à ce que les préformes (1) soient, sur au moins une première section du parcours (T), transportées sur une rangée unique et, sur au moins une seconde section du parcours (T), transportées sur deux rangées voisines, l'une au moins des sections de chauffage (24) étant agencée dans l'une des secondes sections et la section de chauffage (24) comprenant au moins un dispositif de chauffage (30) avec deux couloirs de chauffage orientés parallèlement dans le sens de transport (R) des préformes (1), chaque couloir de chauffage étant respectivement affecté à l'une des deux rangées voisines de préformes (1), le dispositif de chauffage (30) présentant des radiateurs de chauffage pour le conditionnement thermique des préformes (1) et les radiateurs de chauffage étant agencés entre les deux couloirs de chauffage.

2. Dispositif de chauffage (H) selon la revendication 1, **caractérisé en ce que** le dispositif de chauffage (H) présente au moins deux sections de chauffage (24) espacées s'étendant le long du parcours (T), et l'une des premières section du parcours (T) étant notamment aménagée entre les deux sections de chauffage (24).

3. Dispositif de chauffage (H) selon l'une des revendications 1 ou 2, **caractérisé en ce que** le dispositif de chauffage (H) comprend une première zone de transfert pour la réception de préformes (1) respectivement par un moyen de manipulation (39) ainsi qu'une seconde zone de transfert pour la remise des préformes (1) par les moyens de manipulation (39), la première zone de transfert et/ou la seconde zone de transfert étant agencée(s) dans l'une des premières sections.

4. Dispositif de chauffage (H) selon l'une des revendications 1 à 3, **caractérisé en ce que** les moyens de manipulation (39) comprennent respectivement un mandrin de maintien (67) déplaçable transversalement par rapport au sens de transport (R), le mandrin de maintien (67) comprenant une tête de maintien (48) pénétrant dans la section d'embouchure (21) d'une préforme (1).

5. Dispositif de chauffage (H) selon l'une des revendications 1 à 4, **caractérisé en ce que** les moyens de manipulation (39) présentent respectivement un élément d'accouplement (63) pour la rotation d'une préforme (1) maintenue par le moyen de manipulation (39), un dispositif d'entraînement en rotation agissant conjointement avec les éléments d'accouplement (63) étant prévu dans la zone d'au moins l'une des sections de chauffage (24).

6. Dispositif de chauffage (H) selon l'une des revendications 1 à 5, **caractérisé en ce que** le dispositif de transport présente une chaîne de transport (F) circulant le long du parcours (T), laquelle chaîne comporte plusieurs chaînons (33) reliés entre eux par une articulation tournante et porte les moyens de manipulation (39), les chaînons (33) de la chaîne de transport (F) se trouvant en une position d'extension dans les premières sections du parcours (T) et en une position repliée dans les secondes sections du parcours (T).

7. Dispositif de chauffage (H) selon la revendication 6, **caractérisé en ce que** le dispositif de transport comprend des moyens de guidage agencés dans une section de transition entre l'une des premières sections du parcours (T) et l'une des secondes sections du parcours (T) pour le guidage forcé des chaînons (33) entre une position d'extension à l'intérieur de la première section et une position repliée à l'intérieur de la seconde section.

8. Dispositif de chauffage (H) selon la revendication 6 ou 7, **caractérisé en ce que** le dispositif de transport comprend des moyens de guidage forcé des chaînons agencés dans l'une des premières sections et/ou l'une des secondes sections du parcours (T) pour maintenir les chaînons en position d'extension à l'intérieur de la première section et en position repliée à l'intérieur de la seconde section.

9. Dispositif de chauffage (H) selon l'une des revendications 6 à 8, **caractérisé en ce que** la chaîne de transport (F) présente autant de chaînons (33) que le dispositif de transport présente de moyens de manipulation (39), un moyen de manipulation (39) étant notamment respectivement maintenu par un chaînon (33) ou un moyen de manipulation (39) étant respectivement maintenu coaxialement par rapport à un axe de rotation d'une articulation tournante entre deux chaînons (33).

10. Dispositif de chauffage (H) selon l'une des revendications 6 à 9, **caractérisé en ce que** le dispositif de transport comporte des écrans thermiques (41) qui, dans l'une au moins des sections de chauffage (24), notamment dans une section de chauffage (24) à l'intérieur d'une seconde section du parcours (T), sont supportés par la chaîne de transport de façon à venir se placer entre deux moyens de manutention (39).

11. Dispositif de chauffage (H) selon l'une des revendications 6 à 10, **caractérisé en ce que** le dispositif de transport présente un convoyeur (69) entraîné et doté d'organes d'entraînement (70) en circulation, quelques uns au moins des chaînons (33) de la chaîne de transport présentant respectivement un élément d'entraînement (71), plusieurs élément d'entraînement (71) étant - dans au moins l'une des secondes sections du parcours (T) - respectivement engagés en couplage cinématique dans un organe d'entraînement (70).

12. Machine de moulage par soufflage comprenant un dispositif de chauffage (H) selon l'une des revendications 1 à 11 avec au moins une section de chauffage (24) pour le conditionnement thermique de préformes (1) en matériau thermoplastique de sorte à obtenir un profil de températures approprié au moulage par soufflage, et comprenant un dispositif de moulage (3) par soufflage pour la transformation biaxiale par soufflage de la préforme (1) en un récipient (2).

13. Procédé de transport de préformes (1) en matériau thermoplastique le long d'un parcours (T) d'un dispositif de chauffage (H) avec au moins une section de chauffage (24) pour le conditionnement thermique des préformes (1) en vue d'obtenir un profil de températures approprié au moulage par soufflage, **caractérisé en ce que** les préformes (1) sont, sur au moins une première section du parcours (T), transportées sur une rangée unique et, sur au moins une seconde section du parcours (T), transportées sur deux rangées voisines, les préformes (1) étant transportées sur deux rangées voisines dans la zone d'au moins l'une des sections de chauffage (24) et les préformes (1) étant - dans la ou les section(s) de chauffage (24) - transportées à travers au moins une unité de chauffage (30) avec deux couloirs de chauffage, chacune des deux rangées voisines de préformes (1) étant respectivement conduite à travers un couloir de chauffage respectif et le dispositif de chauffage (30) présentant des radiateurs de chauffage pour le conditionnement thermique des préformes (1), lesquels radiateurs de chauffage sont agencés entre les deux couloirs de chauffage.

14. Procédé selon la revendication 13, **caractérisé en ce que** les préformes (1) sont conduites sur une rangée unique le long du parcours (T) entre deux sections de chauffage (24) espacées.

15. Procédé selon l'une des revendications 13 ou 14, **caractérisé en ce que** les préformes (1) sont transportées sur une rangée unique dans une première zone de transfert où elles sont remises à des moyens de manipulation (39) et/ou dans une seconde zone de transfert où elles sont remises par les moyens de manipulation (39).
